# EUROPEAN PATENT SPECIFICATION

(11) **EP 3 300 950 B1**
(45) Date of publication and mention of the grant of the patent: **05.08.2020**
(21) Application number: 17193613.1
(22) Date of filing: 28.09.2017
(51) Int. Cl.: B62J 6/05, B60Q 1/00, B60Q 1/26, B62J 6/04

(54) **STRADDLED VEHICLE**
GRÄTSCHSITZFAHRZEUG
VÉHICULE À ENFOURCHER

(30) Priority: 30.09.2016 CN 201610875337
(43) Date of publication of application: 04.04.2018
(73) Proprietor: Yamaha Hatsudoki Kabushiki Kaisha, Iwata-shi Shizuoka 438-8501 (JP)
(72) Inventor: LIN, San-Ping, 320 Taoyuan City (TW); SHEN, Ming-Ze, 320 Taoyuan City (TW); LI, Tzu Pin, 320 Taoyuan City (TW); TSAO, Yuan Ming, 320 Taoyuan City (TW); CHENG, Chao Hung, 320 Taoyuan City (TW); HSIEH, Chin-Yu, 320 Taoyuan City (TW)
(74) Representative: Grünecker Patent- und Rechtsanwälte PartG mbB

(56) References cited:
- CN-A- 105 818 897
- JP-A- 2012 240 425
- US-A1- 2013 235 602

## Description

The present invention relates to a straddled vehicle according to the preamble of independent claim 1. Such a straddled vehicle can be taken from the prior art document JP 2012-240425 A. In particular, said prior art document discloses a taillight unit that enables characteristics of a reflecting surface of a reflector of a taillight to be effectively recognized by a viewer. A reflector includes a reflector center part that is provided with a bulb, and right and left reflector side parts that each have a reflecting surface different in light reflection mode from a reflecting surface of the reflector center part. A lens of the taillight includes a lens center part that faces the reflector center part, and right and left lens side wall parts that are extended toward boundaries between the reflector center part and the reflector side parts. The lens side wall parts extends toward the boundary between the reflector central part and the reflector side part, so the existence of the reflector side portion is more easily to be recognized.

As an example of a conventional straddled vehicle, a straddled vehicle includes a tail lamp disposed centrally on a rear part of a body, and two flasher lamps disposed on both sides, i.e., the right side and the left side, respectively, of the tail lamp. Further, a cover part is mounted above the tail lamp and the flasher lamps on both sides of the tail lamp. As viewed from the rear, the height of the cover part gradually decreases from the center toward both sides thereof. That is, the height of a part of the cover part located above the flasher lamps disposed on both sides of the tail lamp is lower than the height of a part of the cover part located above the center of the tail lamp. Further, a storage box is disposed below a seat and formed by being surrounded by the cover part within a vehicle-width direction of a rear body frame.

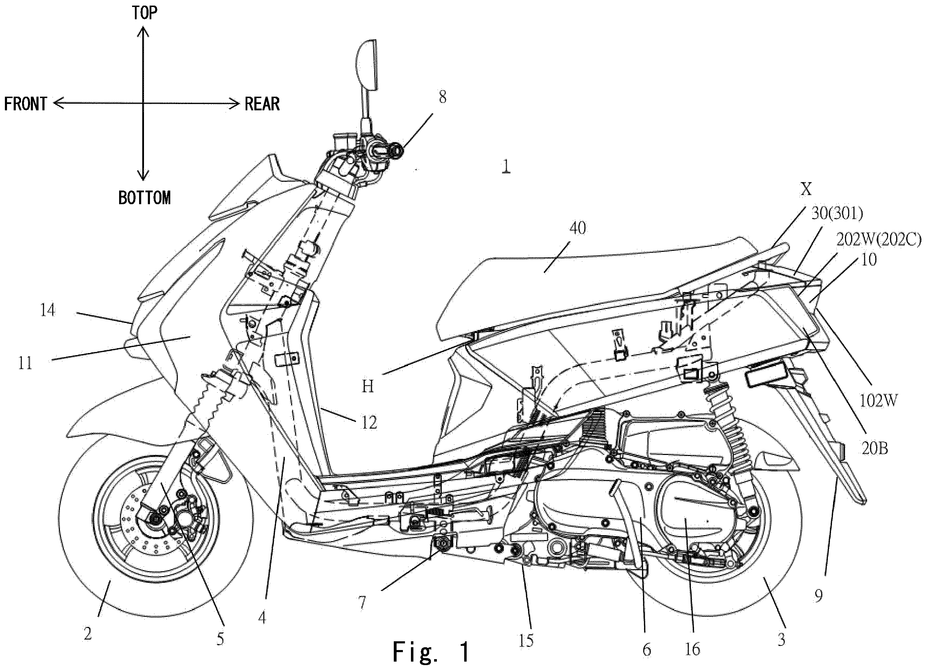

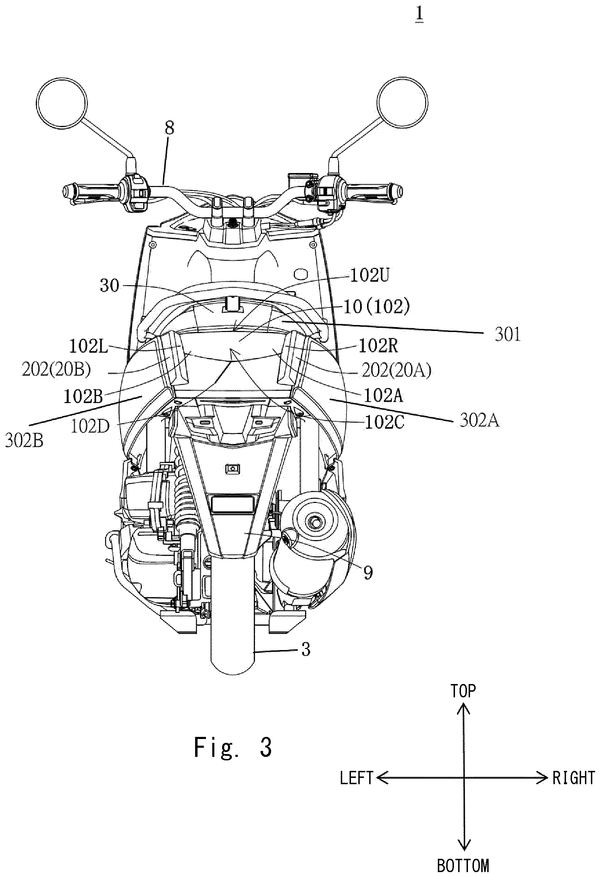

As an example, JP H5-338569 A discloses a scooter-type two-wheeled motor vehicle in which a tail-brake lamp assembly 32 and rear turn-signal lamp assemblies 33 are respectively disposed in a rear-end lower part of a rear body 14, and as perceived in a side view in Fig. 1, the height of a rear cover 26 disposed above the tail-brake lamp assembly 32 and the rear turn-signal lamp assemblies 33 gradually decreases from the center of the rear cover 26 to both sides thereof (see paragraphs [0015] and [0016] of the specification, and Figs. 1 and 3). Further, the tail-brake lamp assembly 32 and the left/right rear turn-signal lamp assemblies 33 are disposed at the same height as each other in the vehicle vertical direction.

It should be noted that in the straddled vehicle disclosed in JP H5-338569 A, it is necessary to perform maintenance work for the tail-brake lamp assembly 32 and the rear turn-signal lamp assemblies 33. The maintenance work means work for, for example, replacing a light source unit such as a bulb or an LED mounted in each of the tail-brake lamp assembly 32 and the rear turn-signal lamp assemblies 33 and/or inspecting components such as a wiring cable. Further, to reduce the maintenance time, it is possible to perform the maintenance work without removing the rear cover 26 by putting a hand from a space that is formed by removing the storage box (though it is not described in JP H5-338569 A, it is often provided in a straddled vehicle) into a space formed between the rear cover 26 and the tail-brake lamp assembly 32 or a space formed between the rear cover 26 and the left and right rear turn-signal lamp assemblies 33. In other words, the space formed between the rear cover 26 and the tail-brake lamp assembly 32 and the space formed between the rear cover 26 and the left and right rear turn-signal lamp assemblies 33 serve as maintenance spaces.

However, in the conventional straddled vehicle disclosed in JP H5-338569 A, because the height of the part located above the rear turn-signal lamp assemblies 33 on both sides of the rear cover 26 is lower than the height of the part located above the tail-brake lamp assembly 32, the vertical maintenance space formed between the rear cover 26 and the left and right rear turn-signal lamp assemblies 33 is narrower than the vertical maintenance space formed between the rear cover 26 and the tail-brake lamp assembly 32. As a result, when a worker replaces a light source unit mounted in each of the rear turn-signal lamp assemblies 33 on both sides or inspects a component such as a wiring cable, the maintenance work could not be as easily performed as performing maintenance work for the tail-brake lamp assembly 32 because the maintenance space of the rear turn-signal lamp assemblies 33 on both sides is insufficient.

It has been considered a structure in which the places where the flasher lamps on both sides are mounted are shifted toward the front of the body and the place where the light source unit is mounted in each of the flasher lamps on both sides is also shifted toward the front of the body, in order to make the maintenance work for the periphery of the flasher lamps on both sides to be performed more easily from the vertical maintenance space formed between the cover part and the flasher lamps on both sides. However, the inventor wanted to improve the visibility of a driver of a vehicle located behind the right-rear side of the body while the driver saw the viewable surface of the flasher lamp located on the opposite left side of the body, when the mounting places of the flasher lamps are shifted toward the front of the body beyond the tail lamp. Similarly, the inventor wanted to improve the visibility of a driver of a vehicle located behind the left-rear side of the body while the driver saw the viewable surface of the flasher lamp located on the opposite right side of the body, when the mounting places of the flasher lamps are shifted toward the front of the body beyond the tail lamp. In other words, the inventor wanted to improve the visibility of a driver onto the flasher lamp, which is located on the opposite side and overlapped with the tail lamp.

It has been considered the following structure, in order to achieve both the workability of maintenance performed by a worker through the maintenance space and the visibility of the flasher lamp while being seen by a driver of a vehicle located on the opposite side. That is, to secure the workability of maintenance, the mounting places of two flasher lamps disposed on both sides, i.e., the right side and the left side, respectively, of the tail lamp are shifted toward the front of the body. Further, to improve the visibility from the opposite side, the inventor conceived a structure in which the mounting places of clear covers of flasher lamps including light source units and the clear covers, which enclose the light source units, are shifted toward the rear of the body. However, the inventor further realized that in the case where the mounting places of the clear covers of the flasher lamps on both sides are shifted toward the rear of the body, when a driver of a vehicle located behind the right-rear side of the body views the viewable surface of the opposite left-side flasher lamp or a driver of a vehicle located behind the left-rear side of the body views the viewable surface of the opposite right-side flasher lamp, red light emitted from the tail lamp, for example, is reflected on the viewable surface of the blinking flasher lamp. In other words, in the case where the mounting places of the clear covers of the flasher lamps on both sides are simply shifted toward the rear of the body, there is a limit on the improvement of the visibility of the flasher lamp while being seen by the driver of the vehicle located on the opposite side.

Meanwhile, it has been also considered a structure, in which the height of the flasher lamps on both sides is increased so that the flusher lamps extend downward beyond the lower edge of the tail lamp. That is, the tail lamp and the flasher lamps on both sides thereof are arranged at difference heights in the vehicle vertical direction. However, when the height of the flasher lamps on both sides is simply increased in the vertical direction, the size of the rear part of the body in the vehicle-height direction tends to increase.

Therefore, in order to further improve the visibility of the flasher lamp while being seen by a driver of a vehicle located on the opposite side, and at the same time to prevent the size of the rear part of the body in the vehicle-height direction from being increased, the inventor has conceived a structure in which two flasher lamps are disposed on both sides, i.e., the right and left sides, respectively, of a tail lamp, and the upper parts of the two flasher lamps, which are extended downward beyond the lower edge of the tail lamp, are located ahead of the lower parts of the two flasher lamps. That is, it has been conceived a structure, in which the lower parts of the flasher lamps on both sides are located behind the upper parts of the flasher lamp.

It is an object of the present invention to provide a straddled vehicle capable of improving the workability of maintenance for the periphery of flasher lamps on both sides performed by a worker through a maintenance space, enhancing the visibility of a flasher lamp while being seen by a driver of a vehicle located on the opposite side to the flasher lamp, and reducing the size of the rear part of the body (in the vehicle-height direction).

According to the present invention said object is solved by a straddled vehicle having the features of independent claim 1. Preferred embodiments are laid down in the dependent claims.

A straddled vehicle according to a first aspect comprises: a first lamp unit (10) disposed on a central part of a rear part of a body and including a first light source unit (101) and a first clear cover (102); a right lamp unit (20A) and a left lamp unit (20B) disposed on both sides, that is, a right side and a left side, respectively, of the first lamp unit (10), and each of the right lamp unit (20A) and the left lamp unit (20B) including a second light source unit (201) and a second clear cover (202); and a cover part (30) disposed above the first lamp unit (10), the right lamp unit (20A), and the left lamp unit (20B), in which a vertical length of the cover part (30) until the first lamp unit (10) on the central part is longer than a vertical length of the cover part (30) until the right lamp unit (20A) and the left lamp unit (20B) on both side parts, the second clear cover (202) extends downward beyond a lower edge (102D) of the first clear cover (102), the second clear cover (202) is located behind both sides of the first clear cover (102), and a lower-half part (222) of the second clear cover (202) is located behind an upper-half part (221) thereof, in the right-side view, at least a part of the second clear cover (202) of the right lamp unit (20A) overlaps at least a part of a right side of the first clear cover (102), and in the left-side view, at least a part of the second clear cover (202) of the left lamp unit (20B) overlaps at least a part of a left side of the first clear cover (102), and the second light source units (201) are located ahead of the first light source unit (101).

According to the straddled vehicle in accordance with the first aspect, the following advantageous effects can be provided. The vertical length of the cover part (30) until the first lamp unit (10) on the central part is longer than the vertical length of the cover part (30) until the right lamp unit (20A) and the left lamp unit (20B) on both side parts. Therefore, while the maintenance ability of the first lamp unit is secured, the vertical length of both sides of the cover part is reduced.

Further, in the straddled vehicle according to the first aspect, because the vertical length of the cover part (30) to the first lamp unit (10) on the central part is longer than the length of the cover part (30) until the right and left lamp units (20A) and (20B) on both side parts, the vertical maintenance space formed between the cover part (30) and the right and left lamp units (20A) and (20B) located on the right and left sides thereof is narrower than the vertical maintenance space formed between the cover part (30) and the first light source unit (101). Even in this case, the second light source unit (201) is located ahead of the first light source unit (101), and hence the mounting place of the second light source unit (201) mounted in each of the right and left lamp units (20A) and (20B) located on the right and left sides is shifted toward the front of the body. Therefore, it is easy for a worker to perform maintenance work for the periphery of the right and left lamp units (20A) and (20B) located on the right and left sides from the vertical maintenance space formed between the cover part (30) and the right and left lamp units (20A) and (20B) located on the right and left sides thereof.

Furthermore, in the straddled vehicle according to the first aspect, the second clear cover (202) is located behind both sides of the first clear cover (102), and in the right-side view, at least a part of the second clear cover (202) of the right lamp unit (20A) overlaps at least a part of a right side of the first clear cover (102), and in the left-side view, at least a part of the second clear cover (202) of the left lamp unit (20B) overlaps at least a part of a left side of the first clear cover (102). In this way, even when a driver of a vehicle located on the right-rear side views the viewable surface of the left lamp unit (20B) on the opposite side or a driver of a vehicle located on the left-rear side views the viewable surface of the right lamp unit (20A) on the opposite side, the driver of the vehicle located obliquely behind the straddled vehicle can clearly view, even when a part of the viewable surface of the right lamp unit (20A) or the left lamp unit (20B) on the opposite side is blocked by the first lamp unit (10), a part of the second clear cover (202) that is located behind both sides of the first clear cover (102) and hence is not blocked. In this way, it is possible to improve the visibility of the second clear cover (202) of the right and left lamp units (20A) and (20B) as viewed by a driver of a vehicle located on the opposite side of the second clear cover (202) of the right and left lamp units (20A) and (20B).

Further, in the straddled vehicle according to the first aspect, because the second clear cover (202) extends downward beyond a lower edge (102D) of the first clear cover (102), the length of a viewable area of the second clear cover (202) is increased and a viewable area that is not affected by the external appearance of the first lamp unit (10) and light emitted therefrom is also increased. In this way, even when a driver of a vehicle located on the right-rear side views the viewable surface of the left lamp unit (20B) on the opposite side or a driver of a vehicle located on the left-rear side views the viewable surface of the right lamp unit (20A) on the opposite side, the driver of the vehicle located obliquely behind the straddled vehicle can clearly view, even when a part of the viewable surface of the right lamp unit (20A) or the left lamp unit (20B) on the opposite side is blocked by the first lamp unit (10) or when, for example, red light emitted from the first ramp unit (10) is reflected on the viewable surface of the blinking right lamp unit (20A) or the left lamp unit (20B), a part of the second clear cover (202) that extends downward beyond the lower edge (102D) of the first clear cover (102). Thereby, it is possible to improve the visibility of the second clear cover (202) of the right and left lamp units (20A) and (20B) as viewed by a driver of a vehicle located on the opposite side of the second clear cover (202) of the right and left lamp units (20A) and (20B).

Furthermore, in the straddled vehicle according to the first aspect, the lower-half part (222) of the second clear cover (202) is located behind the upper-half part (221) thereof. Therefore, it is possible to reduce an increase in the size of the rear part of the body in the vehicle-height direction when compared to the case in which the height of the flasher lamps on both sides is simply extended in the vertical direction so that the height of the flasher lamps on both sides is extended downward beyond the lower edge of the tail lamp.

In summary, according to the straddled vehicle in accordance with the first aspect, it is possible to improve the workability of maintenance for the periphery of the flasher lamps on both sides performed by a worker through the maintenance space and improve the visibility of the flasher lamp from a driver of a vehicle located on the opposite side of the flasher lamp while reducing the size of the rear part of the body in the vehicle-height direction.

In a straddled vehicle according to a second aspect, a central part of the first clear cover (102) is located behind both side parts thereof, and a central part of the second clear cover (202) is located behind both side parts thereof. In this way, the viewable areas of the first clear cover (102) and the second clear cover (202) are increased, and the viewable parts of the first clear cover (102) and the second clear cover (202) have three-dimensional surfaces located rearward, rather than having simple plane surfaces. Because the viewable part of the second clear cover (202) has a three-dimensional surface located rearward, rather than having a simple plane surface, the viewable area of the second clear cover (202) of the right and left lamp units (20A) and (20B) is increased and a part that is not blocked by the first lamp unit (10) is also increased. Therefore, a driver of a vehicle located obliquely rearward can clearly view a part of the second clear cover (202) that Is located behind both sides of the first clear cover (102) and hence is not blocked. In this way, it is possible to improve the visibility of the second clear cover (202) of the right and left lamp units (20A) and (20B) while being seen by a driver of a vehicle located on the opposite side.

In a straddled vehicle according to a third aspect, a rear edge (202W) of the second clear cover (202), which is inclined forward, intersects an extension line extended from a rear edge (102W) of a central part of the first clear cover (102) in the side view. In this way, because the forward inclination of the rear edge (102W) of the central part of the first clear cover (102) is gradually increased from the upper part of the clear cover (102) toward the lower part thereof, the size of the first clear cover (102) in the vehicle-height direction can be reduced even further. Because the size of the first clear cover (102) in the vehicle-height direction is reduced, the length of the viewable area of the second clear cover (202) is increased and a viewable area that is not affected by the external appearance of the first lamp unit (10) and the light emitted therefrom is also increased. Thereby, even when a driver of a vehicle located on the right-rear side views the viewable surface of the left lamp unit (20B) on the opposite side, or a driver of a vehicle located on the left-rear side views the viewable surface of the right lamp unit (20A) on the opposite side, the driver of the vehicle located obliquely behind the straddled vehicle can clearly view, even when a part of the viewable surface of the right lamp unit (20A) or the left lamp unit (20B) on the opposite side is blocked by the first lamp unit (10) or when, for example, red light emitted from the first ramp unit (10) is reflected on the viewable surface of the blinking right lamp unit (20A) or the left lamp unit (20B), a part of the second clear cover (202) that extends downward beyond the lower edge (102D) of the first clear cover (102). Accordingly, it is possible to further improve the visibility of the second clear cover (202) of the right and left lamp units (20A) and (20B) while being seen by a driver of a vehicle located on the opposite side of the second clear cover (202) of the right and left lamp units (20A) and (20B).

In a straddled vehicle according to a fourth aspect, the second clear cover (202) has a triangular shape in cross section. In this way, because the left and right viewable areas of the second clear covers (202) are increased, it is possible to further improve the visibility of the right and left lamp units (20A) and (20B) while being seen by a driver of a vehicle located on the opposite side.

in a straddled vehicle according to a fifth aspect, at least a portion of a top-surface part (202U) of the second clear cover (202) is exposed from the cover part (30). In this way, because the viewable area of the top-surface part (202U) of the second clear cover (202) is increased, it is possible to further improve the visibility of the right and left lamp units (20A) and (20B) when a driver of a large-sized vehicle, such as a truck or a bus and so on, views the straddled vehicle according to the present teaching from above and behind the straddled vehicle.

A straddled vehicle according to a sixth aspect further includes a front wheel and a rear wheel, in which the cover part (30) includes a rear cover (301), and a right side cover (302A) and a left side cover (302B) located on a right side and a left side, respectively, of the rear cover (301), lower edges (302D) of the right and left side covers (302A) and (302B) are inclined obliquely upward from the front toward the rear so that they are located above the rear wheel, and upper edges (302U) of the right and left side covers (302A) and (302B) are inclined obliquely upward from the front toward the rear in such a manner that rear parts of the upper edges (302U) are inclined more sharply than front parts of the upper edges (302U). Therefore, the upper edges (302U) of the right and left side covers (302A) and (302B) are inclined obliquely upward from the front toward the rear in such a manner that rear parts of the upper edges (302U) are inclined more sharply than front parts of the upper edges (302U). In this way, it is possible to increase spaces on both sides behind the space used as the maintenance space between the cover part (30) and the first lamp unit (10) and between the cover part (30) and the right and left lamp units (20A) and (20B) even further, and thereby to improve the maintenance workability for the periphery of the two flasher lamps performed by a worker through the maintenance space.

In a straddled vehicle according to a seventh aspect, the second light source unit (201) is disposed ahead of rear edges of the right and left side covers (302A) and (302B), so that the second light source unit (201) is blocked by the right and left side covers (302A) and (302B) in the side view. In this way, the second light source unit (201) mounted in each of the right and left lamp units (20A) and (20B) gets closer to both sides ahead of the space used as the maintenance space between the cover part (30) and the first lamp unit (10) and between the cover part (30) and the right and left lamp units (20A) and (20B). That is, when a worker performs maintenance work, such as replacing a light source unit, e.g. a light bulb or an LED mounted in the right lamp unit (20A) or the left lamp unit (20B) or inspecting a component such as a wiring cable by putting his/her hand from a space that is formed by removing the storage box into the maintenance space, the worker can easily touch the light source unit with the hand. Therefore, it is possible to improve the workability of maintenance performed by a worker, such as inspecting or replacing the second light source unit (201), even further.

A straddled vehicle according to an eighth aspect further includes a seat part (40) that is openably attached above the cover part (30), in which a lower edge (40D) of a rear part of the seat part (40) is sharply inclined beyond a lower edge (40D) of a front part of the seat part (40) in conformity with the sharp inclination of the upper edges (302U) of the rear part of the right and left side covers (302A) and (302B). In this way, because there is no need to project the rear part of the seat part (40) upward, the size of the rear part of the body in the vehicle-height direction can be reduced even further.

In a straddled vehicle according to a ninth aspect, the cover part (30) has a projecting surface projected upward from both side parts to the central part in the rear view. In this way, because the vertical space from the central part of the cover part (30) to the first lamp unit (10) is larger than the vertical space from both side parts of the cover part (30) to the right and left lamp units (20A) and (20B), a worker can easily perform maintenance work for the periphery of the right and left lamp units (20A) and (20B) located on the right and left sides from the vertical maintenance space formed between the cover part (30) and the right and left lamp units (20A) and (20B) located on the right and left sides thereof.

In a straddled vehicle according to a tenth aspect, an internal space (F) having an opening part (FH) is formed on an underside of the cover part (30) disposed above the first lamp unit (10) and the right and left lamp units (20A) and (20B), and in the internal space (F), a vertical space of the cover part (30) until the first lamp unit (10) on the central part is larger than a vertical space of the cover part (30) until the right and left lamp units (20A) and (20B) on both side parts. In this way, a worker can easily perform maintenance work, such as replacing a light source unit, e.g. a light bulb or an LED mounted in the right lamp unit (20A) or the left lamp unit (20B) or inspecting a component such as a wiring cable by putting his/her hand from a space that is formed by removing the storage box into the internal space (F), which serves as the maintenance space, through the opening part. Therefore, it is possible to improve the workability of maintenance performed by a worker, such as inspecting or replacing the second light source unit (201), even further.

### [Advantageous effect of the Invention]

According to the present teaching, it is possible to provide a straddled vehicle capable of further improving the workability of maintenance for the periphery of flasher lamps on both sides performed by a worker through a maintenance space, further improving the visibility of a flasher lamp while being seen by a driver of a vehicle located on the opposite side of the flasher lamp, and reducing the size of the rear part of the body (in the vehicle-height direction).

### [Brief Description of the Drawings]

Fig. 1 is a left side view of a straddled vehicle 1 according to the present teaching;
Fig. 2 is a plan view of the straddled vehicle 1 according to the present teaching;
Fig. 3 is a rear view of the straddled vehicle 1 according to the present teaching;
Fig. 4 is a locally enlarged left side view showing a left side view of a structure of a portion of a rear-half part of a body of the straddled vehicle 1 according to the present teaching;
Fig. 5 is a locally enlarged rear view showing a rear view of a structure of a portion of a rear part of the body of the straddled vehicle 1 according to the present teaching;
Fig. 6A is a locally enlarged plan view of a portion of the rear-half part of the body of the straddled vehicle 1 in a case where a pinching part X is provided;
Fig. 6B is a locally enlarged plan view of a portion of the rear-half part of the body of the straddled vehicle 1 in a case where the pinching part X is not provided;
Fig. 7A is a locally enlarged inclined view showing a structure of a portion of a rear-half part of a body of a straddled vehicle when a right lamp unit 20A is viewed from left of and behind the vehicle, i.e., viewed in a direction inclined from a vehicle-longitudinal direction by 86 degrees (i.e., an upper-limit viewing angle for the right lamp unit 20A);
Fig. 7B is a locally enlarged inclined view showing a structure of a portion of the rear-half part of the body of the straddled vehicle when a left lamp unit 20B is viewed from right of and behind the vehicle, i.e., viewed in a direction inclined from a vehicle-longitudinal direction by 86 degrees (i.e., an upper-limit viewing angle for the left lamp unit 20B);
Fig. 7C is a locally enlarged inclined view showing a structure of a portion of the rear-half part of the body of the straddled vehicle when the right lamp unit 20A is viewed from left of and behind the vehicle, i.e., viewed in a direction inclined from a vehicle-longitudinal direction by 60 degrees;
Fig. 7D is a locally enlarged inclined view showing a structure of a portion of the rear-half part of the body of the straddled vehicle when the left lamp unit 20B is viewed from right of and behind the vehicle, i.e., viewed in a direction inclined from a vehicle-longitudinal direction by 60 degrees;
Fig. 7E is a locally enlarged inclined view showing a structure of a portion of the rear-half part of the body of the straddled vehicle when the right lamp unit 20A is viewed from left of and behind the vehicle, i.e., viewed in a direction inclined from a vehicle-longitudinal direction by 45 degrees;
Fig. 7F is a locally enlarged inclined view showing a structure of a portion of the rear-half part of the body of the straddled vehicle when the left lamp unit 20B is viewed from right of and behind the vehicle, i.e., viewed in a direction inclined from a vehicle-longitudinal direction by 45 degrees;
Fig. 8A is a schematic view in a case where an internal space F having an opening part FH is viewed from the inside of a cover part 30, a right lamp unit 20A and a left lamp unit 20B;
Fig. 8B is a cross sectional view of a structure of a portion of the cover part 30, a first lamp unit 10, the right lamp unit 20A, and the left lamp unit 20B when a cross section on a line C-C in Fig. 8A is viewed from above;
Fig. 9A is a locally enlarged cross sectional view when a cross section on a line A-A in Fig. 4 is viewed from the front, i.e., a space formed between the cover part 30 and the right and left lamp units 20A and 20B is viewed in a cross section; and
Fig. 9B is a locally enlarged cross sectional view when a cross section on a line B-B in Fig. 4 is viewed from the front, i.e., a space formed between the cover part 30 and the first lamp unit 10 is viewed in a cross section.

### [Preferred Embodiments]

Embodiments according to the present teaching are described hereinafter. Figs. 1 to 3 show a straddled vehicle 1 according to the present teaching. The straddled vehicle 1 means a vehicle on which a rider rides by straddling it. Further, the number of wheels of the straddled vehicle according to the present teaching is not limited to two, and may be three or more. For example, the straddled vehicle may include two front wheels and one rear wheel. The straddled vehicle is not limited to the scooter-type vehicles, and may be other types of two-wheeled motor vehicles, such as sport-type vehicles or moped-type vehicles and so on. Alternatively, the straddled vehicle is not limited to the scooter-type vehicles, and may be other types of vehicles, such as four-wheeled buggies like ATVs (All Terrain Vehicles) and so on.

In the following description, if not being specifically defined, front, rear, left, right, top and bottom generally represent front, rear, left, right, top, and bottom, respectively, as seen by a driver seated on the seat part 40 of the straddled vehicle 1. Top and bottom represent top and bottom, respectively, in the vertical direction when the straddled vehicle 1 is at a standstill on a horizontal plane. Note that textual marks "front", "rear", "left", "right", "top" and "bottom" in Figs. 1 to 9 shown below represent "forward", "rearward", "leftward", "rightward", "upward" and "downward", respectively.

### <<Vehicle as a whole>>

Descriptions are given with reference to Figs. 1 to 4. The straddled vehicle 1 includes at least a front wheel 2, a rear wheel 3, a body frame 4, a pair of front forks 5, a power unit 6, a pivot part 7, a steering handle 8, a license plate attachment plate 9, a first lamp unit 10, a front cover 11, a leg shield 12, a storage box 13, a headlight 14, an engine 15, a transmission unit 16, a right lamp unit 20A, a left lamp unit 20B, a cover part 30, and a seat portion 40.

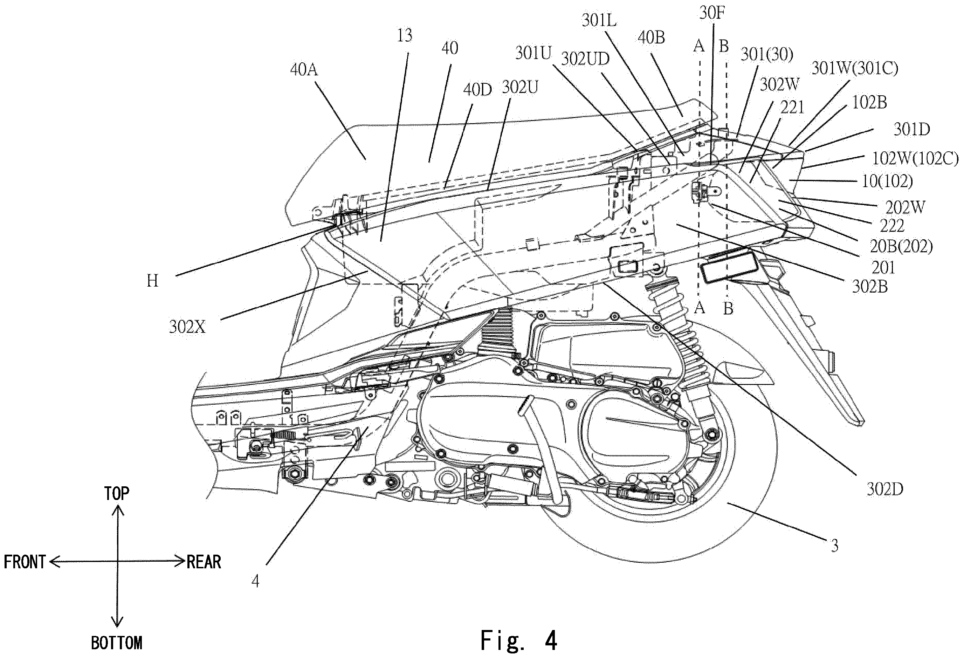

As shown in Fig. 1, a front part of the body frame 4 of the straddled vehicle 1 supports the front forks 5 in such a manner that the front forks 5 can be turned to the left and to the right. A central part of the body frame 4 supports the unit-swing-type power unit 6 in such a manner that the power unit 6 can be vertically swung around the pivot part 7. The seat part 40 is disposed above the power unit 6. The seat part 40 may be a double-riding-type seat part including a front seat and a rear seat. As shown in Fig. 4, the seat part 40 is attached in such a manner that it can be opened and closed with respect to the storage box 13 disposed between the body frames 4 by using a hinge pin H disposed in a front part of the seat part 40 as a rotation axis.

As shown in Fig. 1, the pair of front forks 5 obliquely extends forward and downward. The front wheel 2 is disposed at the lower end of the pair of front forks 5. The upper end of the front forks 5 is attached to an under-bracket (not shown) fixed to the lower end of a steering shaft (not shown). The upper part of the front forks 5 and the steering shaft are covered by the front cover 11 in the front and the leg shield 12 in the rear, respectively. The headlight 14 is disposed in the central part of the front cover 11. The steering handle 8 is disposed at the upper end of the steering shaft.

As shown in Fig. 1, the rear wheel 3 is disposed in a rear part of the power unit 6. The rear wheel 3 is rotatably supported in the rear part of the power unit 6 and driven by a driving force of the power unit 6. The license plate attachment plate 9 is attached below the rear part of the cover part 30. The license plate attachment plate 9 also functions as a fender of the rear wheel 3. As shown in Fig. 4, the seat part 40 is located above the rear wheel 3. As shown in Fig. 4, a space formed below the seat part 40 is covered by the cover part 30 (which includes a rear cover 301, and a right side cover 302A and a left side cover 302B disposed on the right and left sides, respectively, of the rear cover 301; hereinafter, they may also simply referred to as a cover part 30 without distinguishing the left and right sides thereof). In other words, the right and left side covers 302A and 302B are disposed on the left and right sides, respectively, in the vehicle-width direction in a space formed below the seat part 40 (more specifically, in a space formed below the seat part 40 and above the rear wheel 3). A storage space is formed between the right and left side covers 302A and 302B. Although this storage space is used as the storage box 13 in this embodiment, it is not limited by this example. The storage space can be used for other purposes, e.g., for a space in which a fuel tank is installed. Further, in the case of an electric vehicle driven by an electric motor, this storage space can be used as a space in which a battery that supplies electric power to a driving motor is installed.

As shown in Fig. 1, the power unit 6 includes, for example, the engine 15, the transmission unit 16 extending from a side of the engine 15 toward the rear of the vehicle, and a V-belt-type continuously variable transmission (not shown) disposed inside the transmission unit 16. The engine 15 and the transmission unit 16 may be integrally constructed or may be constructed as separate components. In this embodiment, the engine 15 is an air-cooled engine. Further, although the engine-driven-type power unit is shown as an example of the power unit 6 in this embodiment, it is not limited by this example. The power unit 6 may be any type of power unit that generates a driving force for driving the vehicle, and may be a motor-driven-type power unit.

### <<1. Regarding First Lamp Unit 10>>

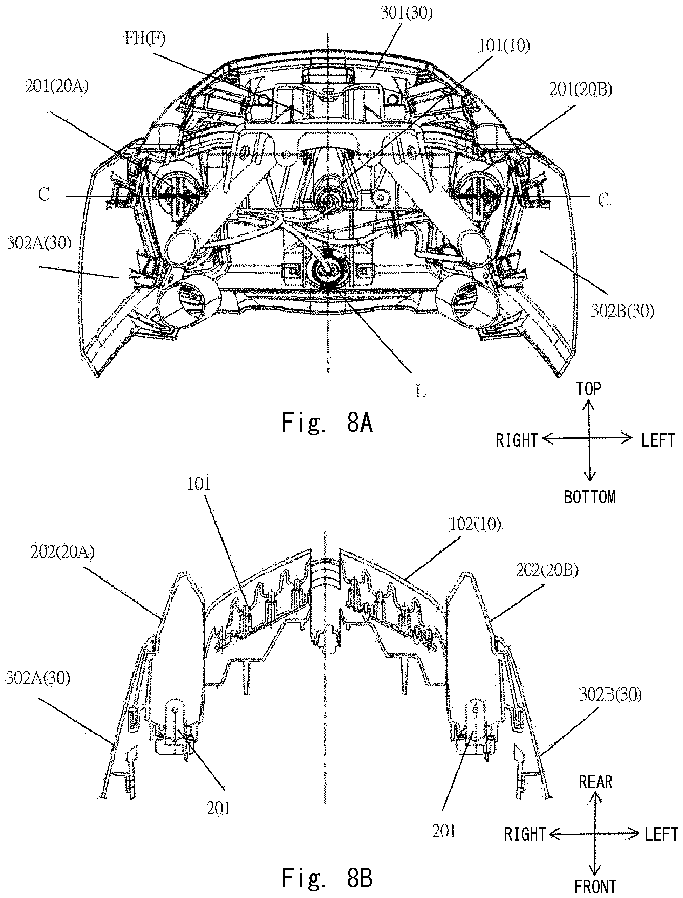

As shown in Fig. 1, the first lamp unit 10 is disposed in the central part of the rear part of the body. As shown in Fig. 3, in the rear view, the first lamp unit 10 has an elongated shape in the left-right direction. The vertical length of the first lamp unit 10 is shorter than the width in the left-right direction thereof. The first lamp unit 10 includes a first light source unit 101 (Figs. 8A and 8B) and a first clear cover 102 (Fig. 3). As shown in Figs. 3 and 4, the casing of the first lamp unit 10 is entirely enclosed and concealed by the cover part 30, except for the first clear cover 102. In other words, in the rear view or the side view, only the first clear cover 102 of the first lamp unit 10 is visible.

### (1-1. Regarding First Light Source Unit 101)

The first light source unit 101 is a light-emitting unit constructed by at least one electric bulb, LED, light-emitting module or the like. Further, the first light source unit 101 may not represent at least one electric bulb, LED, or light-emitting module itself, but may include a wiring cable, a circuit board, and/or the like connected to the at least one electric bulb, LED, or light-emitting module as required. Fig. 8A shows an aspect in which the first light source unit 101 is an LED. As shown in Fig. 8A, the LED, which serves as the first light source unit 101, is mounted in the casing of the first lamp unit 10 through an opening part formed in the casing of the first lamp unit 10. Further, as shown in Fig. 8A, a light source L for a license plate may be further mounted below the first light source unit 101. Fig. 8B shows an aspect in which at least one light-emitting module including a plurality of LEDs is mounted as the first light source unit 101. However, one LED that is called HI-POWER LED may be used as the first light source unit 101. As shown in Fig. 8B, the first light source unit 101, which is the light-emitting module, is disposed in front of the first clear cover 102. Further, Fig. 8B shows an aspect in which two light-emitting modules are arranged in the horizontal direction. Furthermore, the light-emitting module may be a circuit board with a light-emitting element such as an LED and other electronic elements mounted therein.

### (1-2. Regarding First Clear Cover 102)

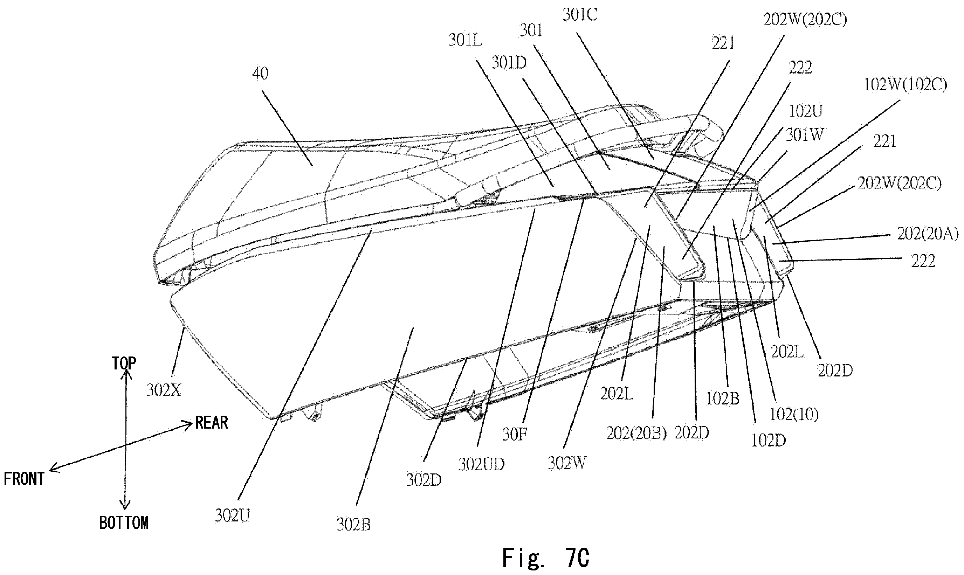

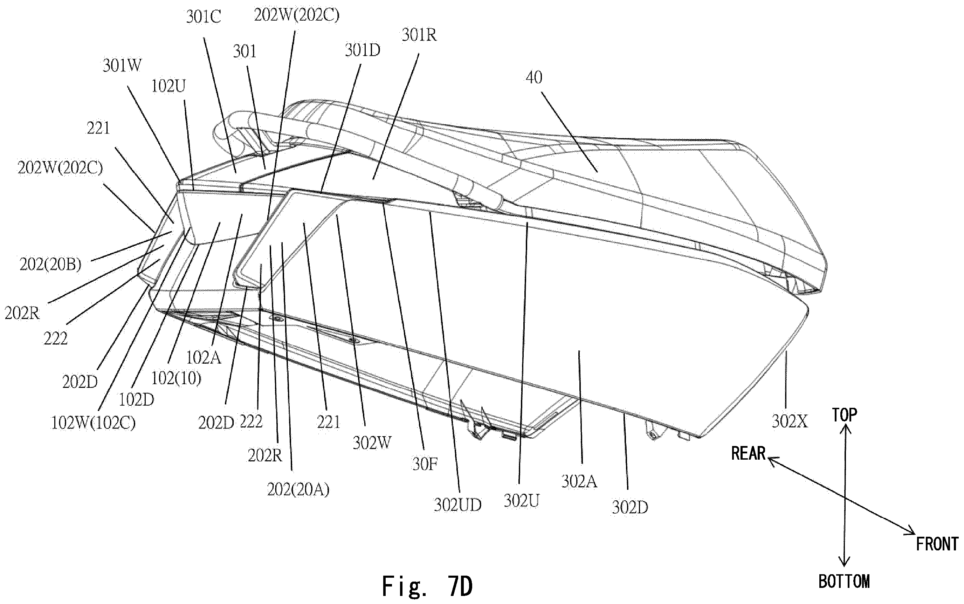

As shown in Fig. 3, in the rear view, the first clear cover 102 has an elongated shape in the left-right direction. The vertical length of the first clear cover 102 is shorter than the width in the left-right direction thereof. Specifically, as shown in Fig. 3, in the rear view, the first clear cover 102 has an upper edge 102U, a lower edge 102D, a left edge 102L, and a right edge 102R. Further, as shown in Fig. 4, in the left-side view, the first clear cover 102 has a rear edge 102W. Furthermore, as shown in Fig. 3, in the rear view, as the first clear cover 102 is divided into three sections in the left-right direction, the first clear cover 102 includes a right-side part 102A, a left-side part 102B, and a central part 102C. In this case, the central part 102C represents the central area of the three sections, the right-side part 102A represents the right-side area located on the right side of the central part of the three sections, and the left-side part 102B represents the left-side area located on the left side of the central part of the three sections. Further, as shown in Fig. 3, in the rear view, the central part 102C also represents a central area with a location having the largest length in the vertical direction as its center. In this case, the right-side part 102A also represents a right-side extending part whose vertical length becomes shorter and shorter from the central part 102C toward the right side. Further, the left-side part 102B also represents a left-side extending part whose vertical length becomes shorter and shorter from the central part 102C toward the left side. By contrast, as shown in Fig. 4, in the left-side view, the central part 102C also represents a central area that has the rear edge 102W of the first clear cover 102 serve as its center, and is a projecting surface projecting rearward. In this case, as shown in Fig. 7C, when the first clear cover 102 is viewed from left of and behind the vehicle, i.e., viewed in a direction inclined from the vehicle-longitudinal direction by 60 degrees, the left-side part 102B also represents a left-side extending part that extends in such a manner that it projects forward as it extends to the left from the central part 102C, which is in the form of the projection surface in the left-right direction. In other words, as shown in Fig. 7C, the central part 102C of the first clear cover 102 is located behind the left-side part 102B. Further, as shown in Fig. 7D, when the first clear cover 102 is viewed from right of and behind the vehicle, i.e., viewed in a direction inclined from the vehicle-longitudinal direction by 60 degrees, the right-side part 102A also represents a right-side extending part that extends in such a manner that it projects forward as it extends to the right from the central part 102C, which is in the form of the projection surface in the left-right direction. In other words, as shown in Fig. 7D, the central part 102C of the first clear cover 102 is located behind the right-side part 102A.

The right-side part 102A, the left-side part 102B, and the central part 102C of the first clear cover 102 constitute a viewable surface of the first clear cover 102, and also constitute a viewable surface of the first lamp unit 10. Note that the viewable surface of the first clear cover 102 (i.e., the viewable surface of the first lamp unit 10) means a part that is not blocked by other components, and is a part that allows light emitted from the first light source unit 101 pass therethrough and thus can be viewed by drivers of other vehicles. Specifically, as shown in Fig. 3, in the rear view, the first clear cover 102 has an elongated polygonal shape in the left-right direction. Meanwhile, as shown in Fig. 7C, when the first clear cover 102 is viewed from left of and behind the vehicle, i.e., viewed in a direction inclined from the vehicle-longitudinal direction by 60 degrees, the central part 102C including the rear edge 102W projects rearward beyond the left-side part 102B, which extends to the left from the rear edge 102W, and has a vertical length longer than the vertical length of the left-side part 102B. Further, as shown in Fig. 7D, when the first clear cover 102 is viewed from right of and behind the vehicle, i.e., viewed in a direction inclined from the vehicle-longitudinal direction by 60 degrees, the central part 102C including the rear edge 102W projects rearward beyond the right-side part 102A, which extends to the right from the rear edge 102W, and has a vertical length longer than the vertical length of the right-side part 102A. In other words, as shown in Figs. 7C and 7D, the first clear cover 102 has an elongated and curved surface shape having a peak line segment (i.e., the rear edge 102W) in the left-right direction. That is, the first clear cover 102 is formed in such a manner that the central part 102C in the vehicle-width direction extends forward as it extends outward in the vehicle-width direction.

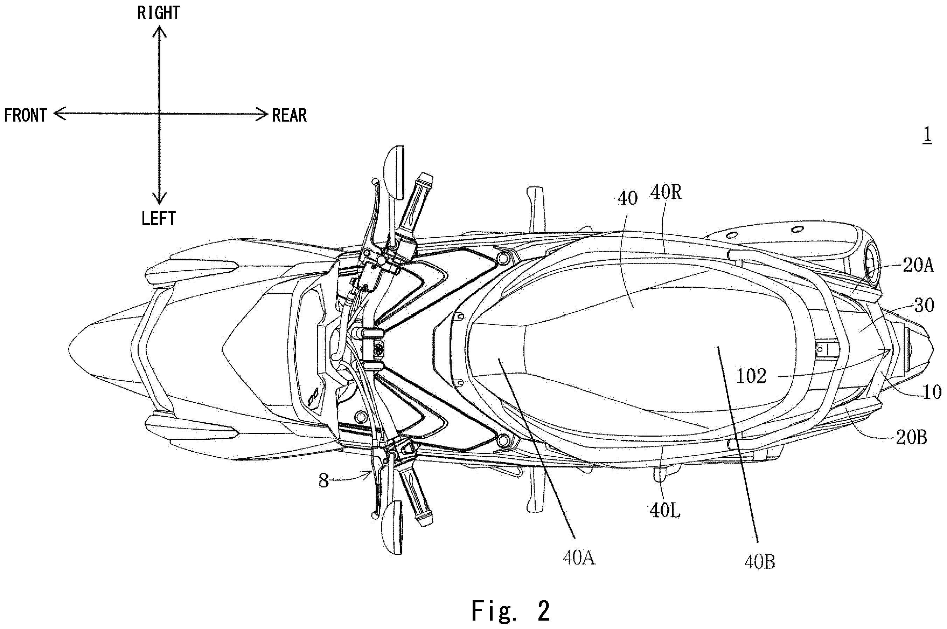

More specifically, as shown in Fig. 3, the upper edge 102U of the central part 102C is connected to the upper edges 102U of the right-side part 102A and the left-side part 102B with their heights being nearly flush with each other. Meanwhile, the lower edges 102D of the right-side part 102A and the left-side part 102B are connected to the lower edge 102D of the central part 102C in a symmetric manner. More specifically, the lower edge 102D of the first clear cover 102 has a symmetric curved-line shape in such a manner that as it moves from either side toward the center, it moves downward (e.g., a non-linear shape such as an approximately V-shape or an approximately U-shape). As shown in Fig. 2, in the plan view, the contour of the first clear cover 102 has an approximately ">"-shaped curved-line shape. Further, as shown in Fig. 3, each of the right edge 102R of the right-side part 102A and the left edge 102L of the left-side part 102B of the first clear cover 102 has a non-vertical shape in the vertical direction. Specifically, the upper ends of the right and left edges 102R and 102L are located on the outer side of the lower ends thereof in the vehicle-width direction.

As shown in Fig. 4, in the left-side view, the upper end of the rear edge 102W of the first clear cover 102 is located behind the lower end thereof in the vertical direction. As shown in Fig. 7C, when the first clear cover 102 is viewed from left of and behind the vehicle, i.e., viewed in a direction inclined from the vehicle-longitudinal direction by 60 degrees, the first clear cover 102 has an elongated and curved surface shape in such a manner that it projects rearward from the left-side part 102B toward the central part 102C and the upper end of the rear edge 102W of the central part 102C is located behind the lower end thereof. Meanwhile, as shown in Fig. 7D, when the first clear cover 102 is viewed from right of and behind the vehicle, i.e., viewed in a direction inclined from the vehicle-longitudinal direction by 60 degrees, the first clear cover 102 has an elongated and curved surface shape in such a manner that it projects rearward from the right-side part 102A toward the central part 102C and the upper end of the rear edge 102W of the central part 102C is located behind the lower end thereof. In other words, as a whole, the first clear cover 102 has a projecting surface having an elongated and curved surface shape in such a manner that the upper edge 102U is inclined rearward more than the lower edge 102D is, and the vertical length between the upper edge 102U and the lower edge 102D is reduced as it moves from the central part toward either side part. Further, as shown in Fig. 3, although the vertical length of each of the right edge 102R of the right-side part 102A and the left edge 102L of the left-side part 102B of the first clear cover 102 is approximately a half of the vertical length of the central part 102C, it may be approximately two thirds or one third of the vertical length of the central part 102C.

The first clear cover 102 is a cover formed of a material having a light-transmitting property. As shown in Fig. 8B, the first clear cover 102 is disposed behind the first light source unit 101. Light emitted from the first light source unit 101 can pass through the first clear cover 102.

### «2. Regarding Right Lamp Unit 20A and Left Lamp Unit 20B»

As shown in Fig. 8B, each of the right lamp unit 20A and the left lamp unit 20B includes a second light source unit 201 and a second clear cover 202. As shown in Fig. 3, in the rear view, the right and left lamp units 20A and 20B are disposed on both sides, i.e., the right and left sides, respectively, of the first lamp unit 10. The right and left lamp units 20A and 20B are arranged on both sides, i.e., the right and left sides of the first lamp unit 10 in a symmetric manner and are identical to each other. Because the right and left lamp units 20A and 20B have the same structure as each other, only the right lamp unit 20A is explained hereinafter. That is, the structure, the shape, and the configuration of the left lamp unit 20B are identical to those of the right lamp unit 20A, unless otherwise specified.

As shown In Fig. 3, each of the right and left lamp units 20A and 20B has an elongated shape in the vertical direction. As shown in Fig. 4, the casing of the left lamp unit 20B is entirely enclosed and concealed by the cover part 30, except for the second clear cover 202. In other words, as shown in Fig. 7C, when the right and left lamp units 20A and 20B are viewed from left of and behind the vehicle, the second clear covers 202 of the right and left lamp units 20A and 20B are visible. Meanwhile, as shown in Fig. 7D, when the right and left lamp units 20A and 20B are viewed from right of and behind the vehicle, the second clear covers 202 of the right and left lamp units 20A and 20B are visible.

### (2-1. Regarding Second Light Source Unit 201)

The second light source unit 201 is a light-emitting unit constructed by at least one electric bulb, LED, light-emitting module or the like. Further, the second light source unit 201 may not represent at least one electric bulb, LED, or light-emitting module itself, but may include a wiring cable, a circuit board, and/or the like connected to the at least one electric bulb, LED, or light-emitting module as required. Figs. 8A and 8B show an aspect in which the second light source unit 201 is an electric bulb. As shown in Fig. 8B, the electric bulbs, which serve as the second light source units 201, are mounted in the casings of the right and left lamp units 20A and 20B through opening parts in the casings of the right and left lamp units 20A and 20B. Figs. 8A and 8B show an aspect in which one electric bulb is mounted as the second light source unit 201 in each of the right and left lamp units 20A and 20B. However, at least one light-emitting module including a plurality of LEDs or one LED that is called HI-POWER LED may be used as the second light source unit 201. As shown in Figs. 4 and 8B, the second light source unit 201 is disposed in front of the second clear cover 202.

### (2-2. Regarding Second Clear Cover 202)

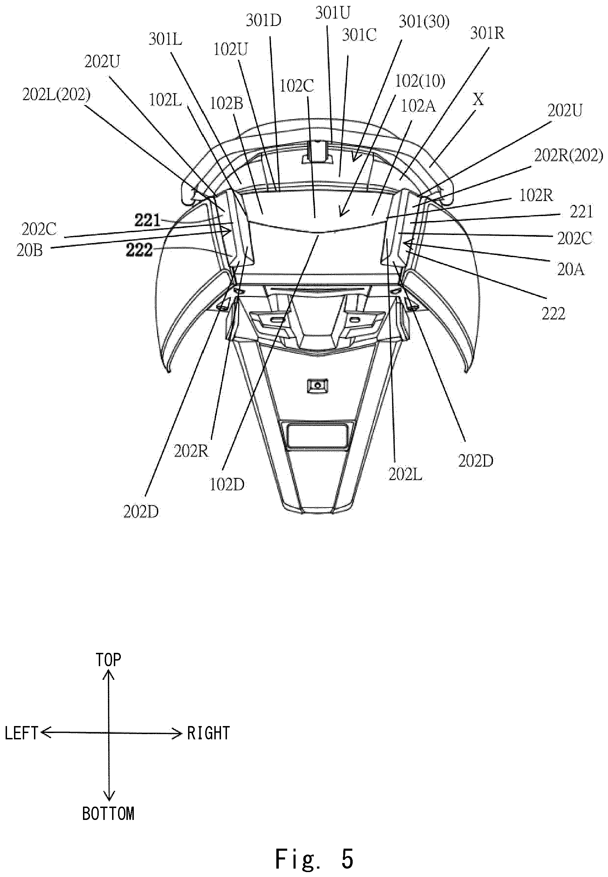

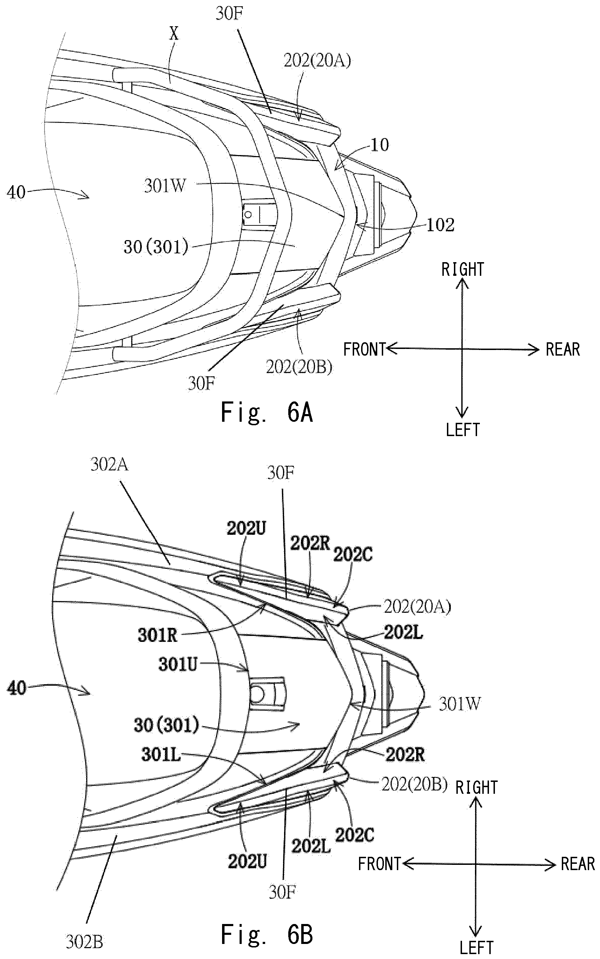

As shown in Fig. 5, in the rear view, the second clear cover 202 is obliquely disposed in the vertical direction. Further, the second clear cover 202 has an elongated shape in the vertical direction. Specifically, the second clear cover 202 has an elongated multi-sided columnar shape in the vertical direction. Note that for the sake of explanation, as shown in Fig. 5, a reference number 221 is added to an upper-half part of the elongated second clear cover 202, and a reference number 222 is added to a lower-half part of the second clear cover 202. Specifically, as shown in Fig. 5, in the rear view, the second clear cover 202 includes a central part 202C, a left-side part 202L, a right-side part 202R, and a bottom-surface part 202D. In this case, the central part 202C represents a central area in the left-right direction of the second clear cover 202, the right-side part 202R represents a right-side area located on the right side of the central part 202C, and the left-side part 202L represents a left-side area located on the left side of the central part 202C. Further, as shown in Fig. 6B, in the plan view, the second clear cover 202 includes a top-surface part 202U. Furthermore, as shown in Fig. 6B, in the plan view, the top-surface part 202U of the second clear cover 202 is connected to the central part 202C. In addition, as shown in Fig. 4, in the left-side view, the second clear cover 202 has a rear edge 202W.

As shown in Fig. 7C, when the right and left lamp units 20A and 20B are viewed from left of and behind the vehicle, i.e., viewed in a direction inclined from the vehicle-longitudinal direction by 60 degrees, the central part 202C of the second clear cover 202 has the rear edge 202W of the second clear cover 202 as its center. Further, the central part 202C of the second clear cover 202 projects rearward. In this case, the left-side part 202L of the second clear cover 202 extends in such a manner that it projects forward as it extends to the left from the central part 202C, which has the rear edge 202W as its center. The surface of the left-side part 202L of the second clear cover 202 is a flat surface rather than a curved surface. The left-side part 202L of the second clear cover 202 has a trapezoidal shape or a rectangular shape. Further, the bottom-surface part 202D of the second clear cover 202 has an approximately triangular shape. The lower-half part 222 of the second clear cover 202 is located behind the upper-half part 221 thereof. In other words, as a whole, the second clear cover 202 is inclined forward in such a manner that the upper-half part 221 is located in the front and the lower-half part 222 is located in the rear. Similarly, as shown in Fig. 7D, when the right and left lamp units 20A and 20B are viewed from right of and behind the vehicle, i.e., viewed in a direction inclined from the vehicle-longitudinal direction by 60 degrees, the central part 202C of the second clear cover 202 has the rear edge 202W of the second clear cover 202 as its center. Further, the central part 202C of the second clear cover 202 projects rearward. In this case, the right-side part 202R of the second clear cover 202 extends in such a manner that it projects forward as it extends to the right from the central part 202C, which has the rear edge 202W as its center. The surface of the right-side part 202R of the second clear cover 202 is a flat surface rather than a curved surface. The right-side part 202R of the second clear cover 202 has a trapezoidal shape or a rectangular shape. Further, the bottom-surface part 202D of the second clear cover 202 has an approximately triangular shape. The lower-half part 222 of the second clear cover 202 is located behind the upper-half part 221 thereof. In other words, as a whole, the second clear cover 202 is inclined forward in such a manner that the upper-half part 221 is located in the front and the lower-half part 222 is located in the rear.

Further, the right-side part 202R, the left-side part 202L, and the central part 202C of the second clear cover 202 constitute viewable surfaces of the second clear covers 202, and also constitute viewable surfaces of the right and left lamp units 20A and 20B. Note that the viewable surfaces of the second clear covers 202 (i.e., the viewable surfaces of the right and left lamp units 20A and 20B) means parts that are not blocked by other components, and are parts that allow light emitted from the second light source units 201 pass therethrough and thus can be viewed by drivers of other vehicles. Further, as shown in Fig. 6B, in the plan view, the viewable area of the left-side part 202L of the second clear cover 202 of the right lamp unit 20A is larger than the viewable area of the right-side part 202R of the second clear cover 202. Meanwhile, as shown in Fig. 6B, in the plan view, the viewable area of the right-side part 202R of the second clear cover 202 of the left lamp unit 20B is larger than the viewable area of the left-side part 202L of the second clear cover 202. Furthermore, the second clear cover 202 is a cover formed of a material having a light-transmitting property. As shown in Fig. 8B, the second clear cover 202 is disposed behind the second light source unit 201. Light emitted from the second light source unit 201 can pass through the second clear cover 202.

### <<3. Cover Part 30>>

As shown in Fig. 3, in the rear view, the cover part 30 is disposed above the first lamp unit 10 and the right and left lamp units 20A and 20B. The cover part 30 includes a rear cover 301, and a right side cover 302A located on the right side of the rear cover 301 and a left side cover 302B located on the left side of the rear cover 301. Further, the rear cover 301 and the right and left side covers 302A and 302B may be Integrally formed, or may be an assembly obtained by combining separate covers with each other.

### (3-1. Regarding Rear Cover 301)

As shown in Fig. 5, in the rear view, the rear cover 301 is disposed above the first lamp unit 10 and the right and left lamp units 20A and 20B. As shown in Fig. 5, in the rear view, as the rear cover 301 is divided into three sections in the left-right direction, the rear cover 301 Includes a central part 301C, a left-side part 301L, and a right-side part 301R. In this case, the central part 301C represents the central area of the three sections, the right-side part 301R represents the right-side area located on the right side of the central part of the three sections, and the left-side part 301L represents the left-side area located on the left side of the central part of the three sections. Further, as shown in Fig. 5, in the rear view, the rear cover 301 has an upper edge 301U and a lower edge 301D. Specifically, as shown in Fig. 5, in the rear view, the lower edge 301D of the rear cover 301 is nearly flush. The upper edge 301U of the rear cover 301 has a symmetric curved-line shape in such a manner that as it moves from the left-side part 301L or the right-side part 301R toward the central part 301C, it moves upward (e.g., an approximately circular-arc shape). The ends of both sides of the approximately circular-arc-shaped upper edge of the rear cover 301 are connected to the ends of both sides of the approximately linear-shaped lower edge 301 D of the rear cover 301. The lower edge 301 D of the rear cover 301 is brought into contact with the upper edge 102U of the first lamp unit 10 and the upper edges 202U of the right and left lamp units 20A and 20B. Furthermore, as shown in Fig. 5, in the rear view, the vertical length of the central part 301C of the rear cover 301 is longer than the vertical length of the left-side part 301L and the right-side part 301R of the rear cover 301. More specifically, as shown in Fig. 5, the vertical length from the upper edge 301U of the central part 301C to the upper edge 102U of the first lamp unit 10 is longer than the vertical length from the upper edges 301U of the left-side part 301L and the right-side part 301R to the upper edges 202U of the right and left lamp units 20A and 20B. In other words, as shown in Fig. 5, in the rear view, the rear cover 301 has an approximately semi-circular shape in which the lower edge 301D is a straight line and the upper edge 301U is a circular-arc line.

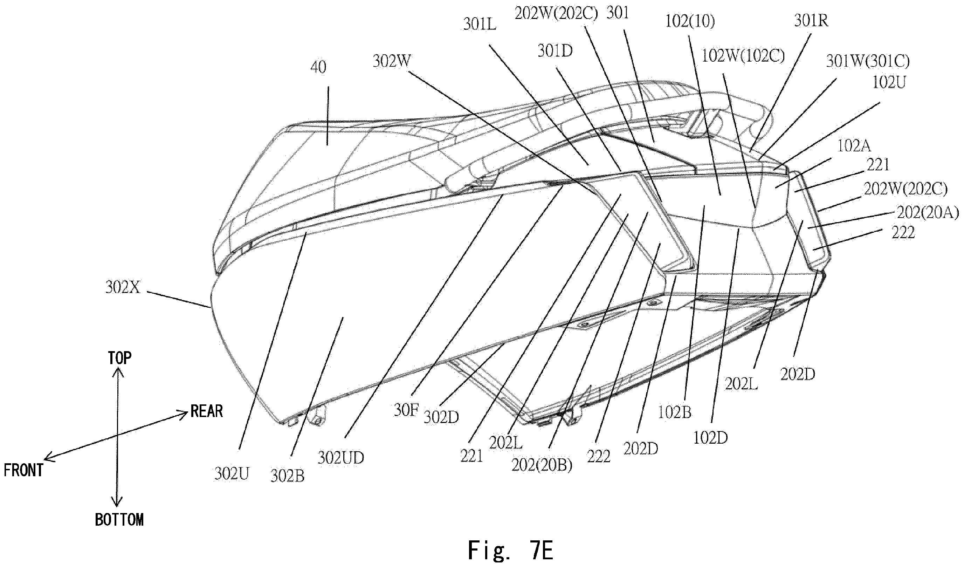

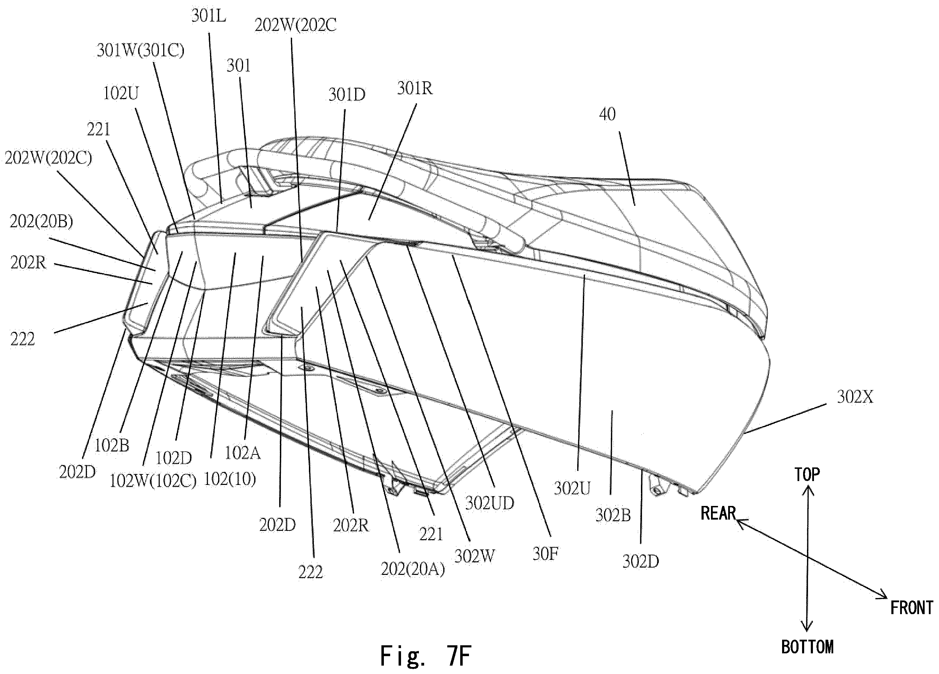

As shown in Fig. 4, in the left-side view, the rear cover 301 has an upper edge 301U, a lower edge 301D, and a rear edge 301W. As shown in Fig. 4, in the left-side view, the upper edge 301 U is formed in such a manner that it extends upward while it extends from the front to the rear. The rear edge 301W is formed in such a manner that it extends downward while it extends from the front to the rear. The lower edge 301D is in the form of a non-horizontal oblique line. In other words, as shown in Fig. 4, in the left-side view, in a state in which a pinching part X is removed, the rear cover 301 has an approximately triangular shape formed by the upper edge 301U, the lower edge 301D, and the rear edge 301W. Further, as shown in Fig. 7E, when the rear cover 301 is viewed from left of and behind the vehicle, the rear cover 301 has a projecting surface projected upward from the left-side part 301L toward the central part 301C. Meanwhile, as shown in Fig. 7F, when the rear cover 301 is viewed from right of and behind the vehicle, the rear cover 301 has a projecting surface projected upward from the right-side part 301R toward the central part 301C. In this embodiment, the rear cover 301 is an assembly formed by combining the central part 301C, the left-side part 301L, and the right-side part 301R to each other, while each of them is an independent cover. However, the central part 301C, the left-side part 301L, and the right-side part 301R may be integrally formed.

### (3-2. Right Side Cover 302A and Left side cover 302B)

The overall compositions of the right and left side covers 302A and 302B are configured in a left-right symmetric manner. In the following description, the left side cover 302B is explained and corresponding compositions of the right side cover 302A are shown in parentheses. As shown in Fig. 4, in the left-side view, the left side cover 302B (the right side cover 302A) has an upper edge 302U, a lower edge 302D, a front edge 302X, and a rear edge 302W. Each of the upper edge 302U and the lower edge 302D is a non-horizontal elongated side, such as an oblique line. Each of the front edge 302X and the rear edge 302W is a non-vertical short side, such as an oblique line. The front end and the rear end of the upper edge 302U are located ahead of the front end and the rear end of the lower edge 302D. The upper end of the front edge 302X is located ahead of the lower end thereof. The upper end of the rear edge 302W is located ahead of the lower end thereof. That is, as shown in Fig. 4, in the left-side view, the left side cover 302B (the right side cover 302A) has such a shape that it extends upward while it extends from the front to the rear. Further, the vertical length between the upper edge 302U and the lower edge 302D of the left side cover 302B (the right side cover 302A) becomes shorter as it extends from the front to the rear. Further, as shown in Fig. 4, in the left-side view, the lower edge 302D of the left side cover 302B is located above the rear wheel 3. The lower edge 302D of the left side cover 302B is inclined obliquely upward from the front toward the rear. Further, a portion of the upper edge 302U of the left side cover 302B (the right side cover 302A) is connected to the lower edge 301D of the rear cover 301. In other words, as shown in Fig. 4, in the left-side view, a connection part 302UD is formed between the upper edge 302U of the left side cover 302B (the right side cover 302A) and the front part of the lower edge 301D of the rear cover 301. Further, an opening part 30F is formed between the rear part of the upper edge 302U of the left side cover 302B and the lower edge 301D of the rear cover 301.

### <<4. Seat Part 40>>

As shown in Fig. 1, in the left-side view, the seat part 40 is openably mounted above the cover part 30. Specifically, as shown in Fig. 2, in the plan view, the seat part 40 includes a front part 40A, a rear part 40B, a left-side part 40L, and a right-side part 40R. As shown in Fig. 2, in the plan view, the seat part 40 has an approximately elliptical shape. As shown in Fig. 4, in the left-side view, a hinge pin H is provided below the front part 40A of the seat part 40. The seat part 40 is attached in such a manner that it can be opened and closed with respect to the storage box 13 disposed between the body frames 4 by using the hinge pin H of the front part 40A as a rotation axis. Note that although the seat part 40 is a double-riding-type seat part including a front seat and a rear seat, it is not limited to this example.

As shown in Fig. 4, in the left-side view, a lower edge 40D of the seat part 40 has a shape that conforms to the upper edge of the cover part 30 (i.e., the upper edge 302U of the left side cover 302B and the upper edge 301U of the rear cover 301). Specifically, as shown in Fig. 4, in the left-side view, the lower edge 40D of the rear part 40B of the seat part 40 is conformed to the sharp inclination of the upper edge 301U of the rear cover 301. The lower edge 40D of the rear part 40B of the seat part 40 is inclined more sharply than a lower edge 40D of the front part 40A. Further, as shown in Fig. 4, in the left-side view, the vertical length of the rear part 40B of the seat part 40 is shorter than the vertical length of the front part 40A.

### <<5. Relation among Various Components>>

### (1) Relation between the first lamp unit 10 and the right and left lamp units 20A and 20B

As shown in Fig. 5, in the rear view, the right and left lamp units 20A and 20B are arranged on both sides, i.e., the right and left sides, respectively, of the first lamp unit 10. More specifically, the second clear cover 202 of the right lamp unit 20A and the second clear cover 202 of the left lamp unit 20B are arranged on both sides, i.e., the right and left sides, respectively, of the first clear cover 102 of the first lamp unit 10. Further, as shown in Fig. 5, in the rear view, the second clear covers 202 extend downward beyond the lower edge 102D of the first clear cover 102. Specifically, about two thirds of the vertical length of the second clear cover 202 of the right lamp unit 20A and about two thirds of the vertical length of the second clear cover 202 of the left lamp unit 20B extend downward beyond the lower edge 102D of the right-side part 102A and the lower edge 102D of the left-side part 102B of the first clear cover 102. Meanwhile, about a half of the vertical length of the second clear cover 202 of the right lamp unit 20A and about a half of the vertical length of the second clear cover 202 of the left lamp unit 20B extend downward beyond the lower edge 102D of the central part 102C of the first clear cover 102. Further, as shown in Fig. 5, in the rear view, the upper edge 202U of the second clear cover 202 is located at approximately the same height as the upper edge 102U of the first clear cover 102. Specifically, as shown in Fig. 5, in the rear view, the upper edge 202U of the second clear cover 202 is located at approximately the same height as the upper edge 102U of the right-side part 102A and the upper edge 102U of the left-side part 102B of the first clear cover 102.

The overall compositions of the right and left lamp units 20A and 20B are configured in a left-right symmetric manner. In the following description, the left lamp unit 20B is explained and corresponding compositions of the right lamp unit 20A are shown in parentheses. As shown in Fig. 4, in the left-side view, the lower end point of the rear edge 202W of the second clear cover 202 of the left lamp unit 20B (the right lamp unit 20A) is located behind the upper end point thereof. The lower end point of the rear edge 202W of the second clear cover 202 of the left lamp unit 20B (the right lamp unit 20A) is located behind the left-side part 102B (the right-side part 102A) of the first clear cover 102. The upper end point of the rear edge 102W of the central part 102C of the first clear cover 102 is located behind the lower end point of the rear edge 202W of the second clear cover 202 of the left lamp unit 20B. The lower end point of the rear edge 102W of the central part 102C of the first clear cover 102 is located in substantially the same place in the vehicle-longitudinal direction as the lower end point of the rear edge 202W of the second clear cover 202 of the left lamp unit 20B (the right lamp unit 20A). Further, as shown in Fig. 4, in the left-side view, at least a portion of the left-side part 102B (the right-side part 102A) of the first clear cover 102 is blocked by the second clear cover 202 of the left lamp unit 20B (the right lamp unit 20A). Specifically, at least a portion of the left-side part 102B (the right-side part 102A) of the first clear cover 102 is blocked by the upper-half part 221 of the second clear cover 202 of the left lamp unit 20B (the right lamp unit 20A). More specifically, as shown in Fig. 4, in the left-side view, a portion of the central part 102C and a portion of the left-side part 102B (the right-side part 102A) of the first clear cover 102 are exposed rearward from the upper-half part 221 of the second clear cover 202 of the left lamp unit 20B (the right lamp unit 20A). In other words, as shown in Fig. 4, in the left-side view, about 60% of the left-half area of the first clear cover 102 is exposed from the second clear cover 202 of the left lamp unit 20B. Further, as shown in Fig. 4, in the left-side view, regarding the exposed area exposed from the second clear cover 202 of the left lamp unit 20B, the exposed area of the left upper-half part of the first clear cover 102 is larger than the exposed area of the left lower-half part of the first clear cover 102.

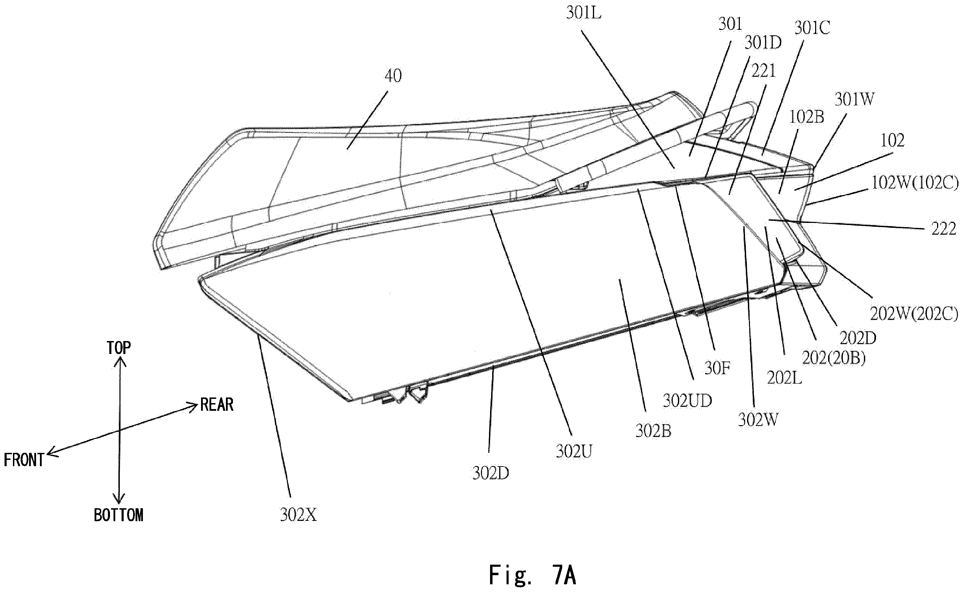

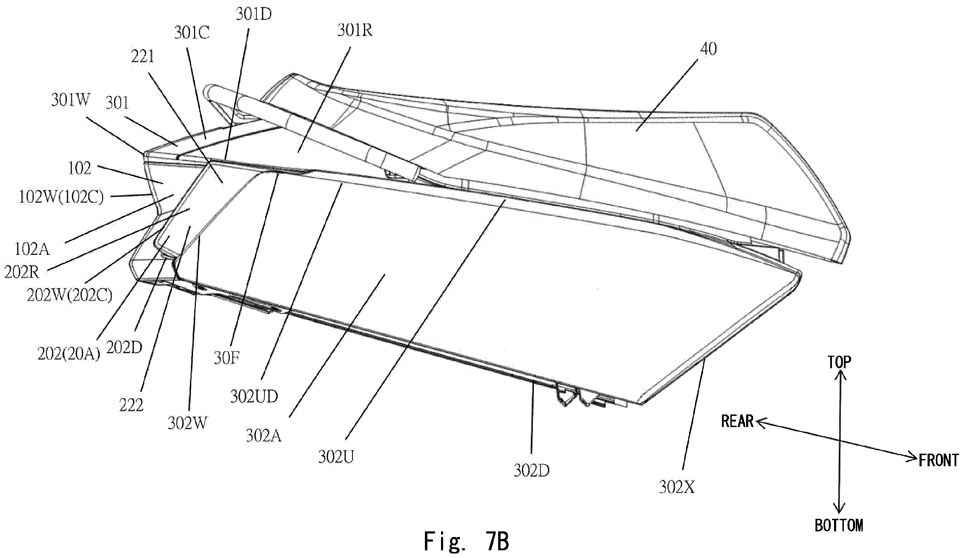

As shown in Fig. 7A, when the right lamp unit 20A is viewed from left of and behind the vehicle, i.e., viewed in a direction inclined from the vehicle-longitudinal direction by 86 degrees (i.e., the upper-limit viewing angle for the right lamp unit 20A), the right lamp unit 20A is not visible. Similarly, as shown in Fig. 7B, when the left lamp unit 20B is viewed from right of and behind the vehicle, i.e., viewed in a direction inclined from the vehicle-longitudinal direction by 86 degrees (i.e., the upper-limit viewing angle for the left lamp unit 20B), the left lamp unit 20B is not visible. Meanwhile, as shown in Fig. 7C, when the right lamp unit 20A is viewed from left of and behind the vehicle, i.e., viewed in a direction inclined from the vehicle-longitudinal direction by 60 degrees, about 80% to 90% of the entire area of the left-side part 202L and a portion of the bottom-surface part 202D of the second clear cover 202 of the right lamp unit 20A are visible. Similarly, as shown in Fig. 7D, when the left lamp unit 20B is viewed from right of and behind the vehicle, i.e., viewed in a direction inclined from the vehicle-longitudinal direction by 60 degrees, about 80% to 90% of the entire area of the right-side part 202R and a portion of the bottom-surface part 202D of the second clear cover 202 of the left lamp unit 20B are visible. Meanwhile, as shown in Fig. 7E, when the right lamp unit 20A is viewed from left of and behind the vehicle, i.e., viewed in a direction inclined from the vehicle-longitudinal direction by 45 degrees, about 91% to 95% of the entire area of the left-side part 202L and a portion of the bottom-surface part 202D of the second clear cover 202 of the right lamp unit 20A are visible. Similarly, as shown in Fig. 7F, when the left lamp unit 20B is viewed from right of and behind the vehicle, i.e., viewed in a direction inclined from the vehicle-longitudinal direction by 45 degrees, about 91% to 95% of the entire area of the right-side part 202R and a portion of the bottom-surface part 202D of the second clear cover 202 of the left lamp unit 20B are visible.

### (2) Relation among the cover part 30, the first lamp unit 10, the right lamp unit 20A, and the left lamp unit 20B

As shown in Fig. 5, in the rear view, the cover part 30 is disposed above the first lamp unit 10 and the right and left lamp units 20A and 20B. The vertical length from the upper edge 301U of the central part 301C of the rear cover 301 to the upper edge 102U of the first clear cover 102 is longer than the vertical length from the upper edge 301U of the right-side part 301R of the rear cover 301 to the upper edge 202U of the second clear cover 202 of the right lamp unit 20A. Further, the vertical length from the upper edge 301U of the central part 301C of the rear cover 301 to the upper edge 102U of the first clear cover 102 is longer than the vertical length from the upper edge 301 U of the left-side part 301 L of the rear cover 301 to the upper edge 202U of the second clear cover 202 of the left lamp unit 20B.

As shown in Fig. 6B, in the plan view, in a state in which a pinching part X is removed, the contour of the opening part 30F formed between the left side cover 302B and the rear cover 301 and the contour of the opening part 30F formed between the right side cover 302A and the rear cover 301 are connected to the contour of the rear edge 301W of the rear cover 301. In this way, as shown in Fig. 6B, in the plan view, when the right side cover 302A, the left side cover 302B, and the rear cover 301 are viewed in the longitudinal direction, the contour of the right side cover 302A, the left side cover 302B, and the rear cover 301 that faces rearward has an approximately "Σ"-shape. As shown in Fig. 6B, in the plan view, at least a portion of the top-surface part 202U, the central part 202C, the left-side part 202L, and the right-side part 202R of the second clear cover 202 of the right lamp unit 20A is exposed from the opening part 30F formed between the right side cover 302A and the rear cover 301. As shown in Fig. 6B, in the plan view, about 60% to 80% of the entire area of the left-side part 202L of the second clear cover 202 of the right lamp unit 20A is exposed from the opening part 30F. Meanwhile, about 5% to 10% of the entire area of the right-side part 202R of the second clear cover 202 of the right lamp unit 20A is exposed from the opening part 30F. Similarly, as shown in Fig. 6B, in the plan view, about 60% to 80% of the entire area of the right-side part 202R of the second clear cover 202 of the left lamp unit 20B is exposed from the opening part 30F. Meanwhile, about 5% to 10% of the entire area of the left-side part 202L of the second clear cover 202 of the left lamp unit 20B is exposed from the opening part 30F.

### (3) Regarding the space formed between the cover part 30, the first lamp unit 10, the right lamp unit 20A, and the left lamp unit 20B

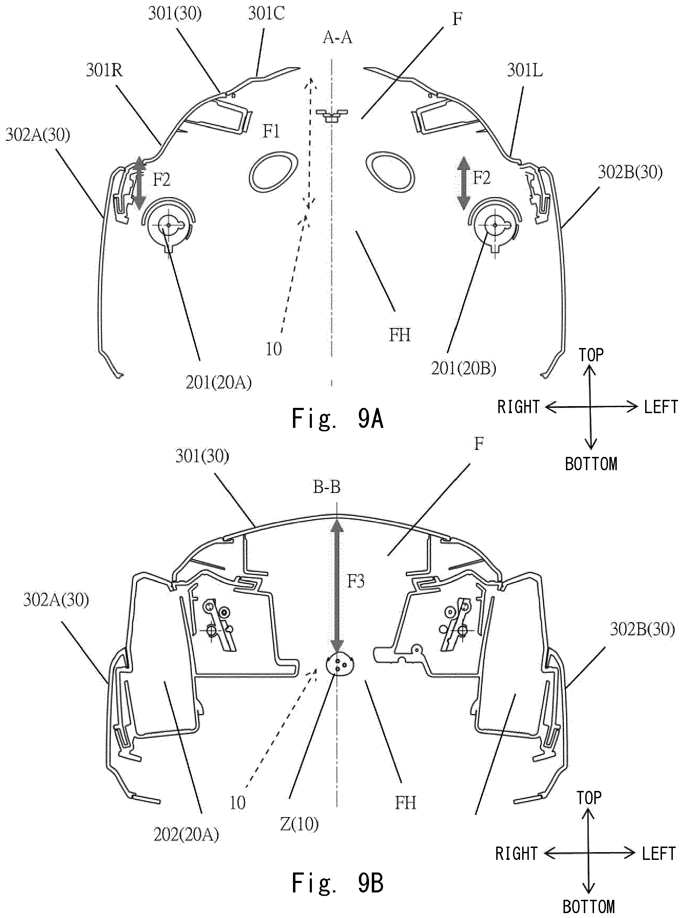

As shown in Fig. 9A, when the space between the cover part 30 and the first lamp unit 10 at a cross-sectional line A-A in Fig. 4 is viewed in cross section, an internal space F having an opening part FH is formed on the inside of the cover part 30 and the right and left lamp units 20A and 20B. Note that because the first lamp unit 10 is omitted in Fig. 9A, the first lamp unit 10 and a space F1 are indicated by dotted lines. As shown in Fig. 9A, in the internal space F, the vertical space until the first lamp unit 10 in the central part of the cover part 30 is larger than the vertical spaces until the right and left lamp units 20A and 20B in both sides of the cover part 30. Specifically, as shown in Fig. 9A, in the internal space F, the vertical space F1 in the central part 301C of the rear cover 301 of the cover part 30 is larger than a vertical space F2 until the right lamp unit 20A in the right-side part 301R of the rear cover 301 of the cover part 30. Similarly, in the internal space F, the vertical space F1 in the central part 301C of the rear cover 301 of the cover part 30 is larger than a vertical space F2 until the left lamp unit 20B in the left-side part 301L of the rear cover 301 of the cover part 30.

Further, as shown in Fig. 9B, when the space between the cover part 30 and the first lamp unit 10 at a cross-sectional line B-B in Fig. 4 is viewed in cross section, a wire-collecting tube Z for storing electric wires is provided near the first lamp unit 10 indicated by the dotted line. As shown in Fig. 9B, when the space between the cover part 30 and the first lamp unit 10 at a cross-sectional line B-B in Fig. 4 is viewed in cross section, there is a space F3 extending from the rear cover 301 of the cover part 30 to the wire-collecting tube Z. Specifically, in the vehicle vertical direction, the distance from the central part 301C of the rear cover 301 of the cover part 30 to the wire-collecting tube Z is longer than the vertical distance from the right-side part 301R of the rear cover 301 of the cover part 30 to a socket part of the right lamp unit 20A and the vertical distance from the left-side part 301L of the rear cover 301 of the cover part 30 to a socket part of the left lamp unit 20B.

### <<6. Configuration of Each Embodiment and Advantageous Effect thereof>>

### (6.1 First Embodiment)

A straddled vehicle according to a first aspect comprises: a first lamp unit 10 disposed on a central part of a rear part of a body, and including a first light source unit 101 and a first clear cover 102; a right lamp unit 20A and a left lamp unit 20B disposed on both side parts, that is, a right side part and a left side part, respectively, of the first lamp unit 10, and each of the right lamp unit 20A and the left lamp unit 20B including a second light source unit 201 and a second clear cover 202; and a cover part 30 disposed above the first lamp unit 10, the right lamp unit 20A, and the left lamp unit 20B, in which a vertical length of the cover part 30 until the first lamp unit 10 on the central part is longer than a vertical length of the cover part 30 until the right lamp unit 20A and the left lamp unit 20B on both side parts, the second clear cover 202 extends downward beyond a lower edge 102D of the first clear cover 102, the second clear cover 202 is located behind both sides of the first clear cover 102, and a lower-half part 222 of the second clear cover 202 is located behind an upper-half part 221 thereof, in the right-side view, at least a portion of the second clear cover 202 of the right lamp unit 20A overlaps at least a portion of a right side of the first clear cover 102, and in the left-side view, at least a portion of the second clear cover 202 of the left lamp unit 20B overlaps at least a portion of a left side of the first clear cover 102, and the second light source units 201 are located ahead of the first light source unit 101.

According to the straddled vehicle in accordance with the first aspect, the following advantageous effects can be provided. The vertical length of the central part of the cover part 30 until the first lamp unit 10 is longer than the vertical length of both side parts of the cover part 30 until the right lamp unit 20A and the left lamp unit 20B. Therefore, while the maintenance ability of the first lamp unit is secured, the vertical length of both side parts of the cover part is reduced.

Further, in the straddled vehicle according to the first aspect, because the vertical length of the central part of the cover part 30 until the first lamp unit 10 is longer than the vertical length of both side parts of the cover part 30 until the right and left lamp units 20A and 20B, the vertical maintenance space formed between the cover part 30 and the right and left lamp units 20A and 20B is narrower than the vertical maintenance space formed between the cover part 30 and the first light source unit 101. Even in this case, the second light source unit 201 is located ahead of the first light source unit 101, hence the mounting place of the second light source unit 201 mounted in each of the right and left lamp units 20A and 20B located on the right and left sides is shifted toward the front of the body. Therefore, it is easy for a worker to perform maintenance work for the periphery of the right and left lamp units 20A and 20B located on the right and left sides from the vertical maintenance space formed between the cover part 30 and the right and left lamp units 20A and 20B located on the right and left sides thereof.

Further, in the straddled vehicle according to the first aspect, the second clear cover 202 is located behind both sides of the first clear cover 102. Further, in the right-side view, at least a portion of the second clear cover 202 of the right lamp unit 20A overlaps at least a portion of a right side of the first clear cover 102, and in the left-side view, at least a portion of the second clear cover 202 of the left lamp unit 20B overlaps at least a portion of a left side of the first clear cover 102. In this way, even when a driver of a vehicle located on the right-rear side sees the viewable surface of the left lamp unit 20B on the opposite side, or a driver of a vehicle located on the left-rear side sees the viewable surface of the right lamp unit 20A on the opposite side, the driver of the vehicle located obliquely behind the straddled vehicle can clearly view, even when a portion of the viewable surface of the right lamp unit 20A or the left lamp unit 20B on the opposite side is blocked by the first lamp unit 10, a part of the second clear cover 202 that is located behind both sides of the first clear cover 102 and hence is not blocked. In this way, it is possible to further improve the visibility of the second clear cover 202 of the right and left lamp units 20A and 20B while being seen by a driver of a vehicle located on the opposite side of the second clear cover 202 of the right and left lamp units 20A and 20B.

Further, in the straddled vehicle according to the first aspect, because the second clear cover 202 extends downward beyond a lower edge 102D of the first clear cover 102, the length of a viewable area of the second clear cover 202 is increased and a viewable area that is not affected by the external appearance of the first lamp unit 10 and light emitted therefrom is also increased. In this way, even when a driver of a vehicle located on the right-rear side sees the viewable surface of the left lamp unit 20B on the opposite side or a driver of a vehicle located on the left-rear side sees the viewable surface of the right lamp unit 20A on the opposite side, the driver of the vehicle located obliquely behind the straddled vehicle can clearly view, even when a portion of the viewable surface of the right lamp unit 20A or the left lamp unit 20B on the opposite side is blocked by the first lamp unit 10 or when, for example, red light emitted from the first lamp unit 10 is reflected on the viewable surface of the blinking right lamp unit 20A or the left lamp unit 20B, a part of the second clear cover 202 that extends downward beyond the lower edge 102D of the first clear cover 102. In this way, it is possible to further improve the visibility of the second clear cover 202 of the right and left lamp units 20A and 20B while being seen by a driver of a vehicle located on the opposite side of the second clear cover 202 of the right and left lamp units 20A and 20B.

Further, in the straddled vehicle according to the first aspect, the lower-half part 222 of the second clear cover 202 is located behind the upper-half part 221 thereof. Therefore, it is possible to reduce an increase in the size of the rear part of the body in the vehicle-height direction, while being compared to the case in which the height of the flasher lamps on both sides is simply extended in the vertical direction so that the height of the flasher lamps on both sides is extended downward beyond the lower edge of the tail lamp.

In summary, according to the straddled vehicle in accordance with the first aspect, it is possible to further improve the workability of maintenance for the periphery of the flasher lamps on both sides performed by a worker through the maintenance space, reduce the size of the rear part of the body in the vehicle-height direction, and further improve the visibility of the flasher lamp while being seen by a driver of a vehicle located on the opposite side of the flasher lamp.

### (6.2 Second Embodiment)

In a straddled vehicle according to a second aspect, a central part of the first clear cover 102 is located behind both side parts thereof, and a central part of the second clear cover 202 is located behind both side parts thereof. In this way, the viewable areas of the first clear cover 102 and the second clear cover 202 are increased, and the viewable portions of the first clear cover 102 and the second clear cover 202 have three-dimensional surfaces located rearward, rather than having simple plain surfaces. Because the viewable portion of the second clear cover 202 has three-dimensional surfaces located rearward, rather than having a simple plain surface, the viewable area of the second clear cover 202 of the right and left lamp units 20A and 20B is increased and a part that is not blocked by the first lamp unit 10 is also increased. Therefore, a driver of a vehicle located obliquely rearward can clearly view a part of the second clear cover 202 that is located behind both sides of the first clear cover 102 and hence is not blocked. In this way, it is possible to further improve the visibility of the second clear cover 202 of the right and left lamp units 20A and 20B while being seen by a driver of a vehicle located on the opposite side.

### (6.3 Third Embodiment)

In a straddled vehicle according to a third aspect, a rear edge 202W of the second clear cover 202, which is inclined forward, intersects an extension line extended from a rear edge 102W of a central part of the first clear cover 102 in the side view. In this way, because the forward inclination of the rear edge 102W of the central part of the first clear cover 102 is gradually increased from the upper part of the clear cover 102 toward the lower part thereof, the size of the first clear cover 102 in the vehicle-height direction can be reduced even further. Because the size of the first clear cover 102 in the vehicle-height direction is reduced, the length of the viewable area of the second clear cover 202 is increased and a viewable area that is not affected by the external appearance of the first lamp unit 10 and light emitted therefrom is also increased. In this way, even when a driver of a vehicle located on the right-rear side sees the viewable surface of the left lamp unit 20B on the opposite side or a driver of a vehicle located on the left-rear side sees the viewable surface of the right lamp unit 20A on the opposite side, the driver of the vehicle located obliquely behind the straddled vehicle can clearly view, even when a portion of the viewable surface of the right lamp unit 20A or the left lamp unit 20B on the opposite side is blocked by the first lamp unit 10 or when, for example, red light emitted from the first lamp unit 10 is reflected on the viewable surface of the blinking right lamp unit 20A or the left lamp unit 20B, a part of the second clear cover 202 that extends downward beyond the lower edge 102D of the first clear cover 102. In this way, it is possible to further improve the visibility of the second clear cover 202 of the right and left lamp units 20A and 20B while being seen by a driver of a vehicle located on the opposite side of the second clear cover 202 of the right and left lamp units 20A and 20B.

### (6.4 Fourth Embodiment)

In a straddled vehicle according to a fourth aspect, the second clear cover 202 has a triangular shape in cross section. In this way, because the left and right viewable areas of the second clear covers 202 are increased, it is possible to further improve the visibility of the right and left lamp units 20A and 20B while being seen by a driver of a vehicle located on the opposite side.

### (6.5 Fifth Embodiment)

In a straddled vehicle according to a fifth aspect, at least a portion of a top-surface part 202U of the second clear cover 202 is exposed from the cover part 30. In this way, because the viewable area of the top-surface part 202U of the second clear cover 202 is increased, it is possible to further improve the visibility of the right and left lamp units 20A and 20B when a driver of a large-sized vehicle, such as a truck or a bus, views the straddled vehicle according to the present teaching from above and behind the straddled vehicle..

### (6.6 Sixth Embodiment)

A straddled vehicle according to a sixth aspect further includes a front wheel and a rear wheel, in which the cover part 30 includes a rear cover 301, and a right side cover 302A and a left side cover 302B located on a right side and a left side, respectively, of the rear cover 301, lower edges 302D of the right and left side covers 302A and 302B are inclined obliquely upward from the front toward the rear so that they are located above the rear wheel, and upper edges 302U of the right and left side covers 302A and 302B are inclined obliquely upward from the front toward the rear in such a manner that rear parts of them are inclined more sharply than front parts of them. The upper edges 302U of the right and left side covers 302A and 302B are inclined obliquely upward from the front toward the rear in such a manner that rear parts of them are inclined more sharply than front parts of them. In this way, it is possible to increase spaces on both sides behind the space used as the maintenance space between the cover part 30 and the first lamp unit 10 and between the cover part 30 and the right and left lamp units 20A and 20B even further, and thereby to further improve the workability of maintenance for the periphery of the two flasher lamps performed by a worker through the maintenance space.

### (6.7 Seventh Embodiment)

In a straddled vehicle according to a seventh aspect, the second light source unit 201 is disposed ahead of rear edges of the right and left side covers 302A and 302B, so that the second light source unit 201 is blocked by the right and left side covers 302A and 302B in the side view. In this way, the second light source unit 201 mounted in each of the right and left lamp units 20A and 20B gets closer to both sides ahead of the space used as the maintenance space between the cover part 30 and the first lamp unit 10 and between the cover part 30 and the right and left lamp units 20A and 20B. That Is, when a worker performs maintenance work, such as replacing a light source unit, e.g. a light bulb or an LED mounted in the right lamp unit 20A or the left lamp unit 20B, or inspecting a component, such as a wiring cable, by putting his/her hand from a space that is formed by removing the storage box into the maintenance space, the worker can easily touch the light source unit with the hand. Therefore, it is possible to improve the workability of maintenance performed by a worker, such as inspecting or replacing the second light source unit 201, even further.

### (6.8 Eighth Embodiment)

A straddled vehicle according to an eighth aspect further includes a seat part 40 that is openably attached above the cover part 30, in which a lower edge 40D of a rear part of the seat part 40 is sharply inclined beyond a lower edge 40D of a front part of the seat part 40 in conformity with the sharp inclination of the upper edges 302U of the rear parts of the right and left side covers 302A and 302B. In this way, because there is no need to project the rear part of the seat part 40 upward, the size of the rear part of the body in the vehicle-height direction can be reduced even further.

### (6.9 Ninth Embodiment)

In a straddled vehicle according to a ninth aspect, the cover part 30 has a projecting surface projected upward from both side parts to the central part in the rear view. In this way, because the vertical space from the central part of the cover part 30 to the first lamp unit 10 is larger than the vertical spaces from both side parts of the cover part 30 to the right and left lamp units 20A and 20B, a worker can easily perform maintenance work for the periphery of the right and left lamp units 20A and 20B located on the right and left sides from the vertical maintenance space formed between the cover part 30 and the right and left lamp units 20A and 20B located on the right and left sides thereof.

### (6.10 Tenth Embodiment)

In a straddled vehicle according to a tenth aspect, an internal space F having an opening part FH is formed on an underside of the cover part 30 disposed above the first lamp part 10 and the right and left lamp units 20A and 20B, and in the internal space F, a vertical space of the cover part 30 until the first lamp unit 10 on the central part is larger than a vertical space of the cover part 30 until the right and left lamp units 20A and 20B on both side parts. In this way, a worker can easily perform maintenance work, such as replacing a light source unit, e.g. a light bulb or an LED mounted in the right lamp unit 20A or the left lamp unit 20B, or inspecting a component, such as a wiring cable, by putting his/her hand from a space that is formed by removing the storage box into the maintenance space through the opening part. Therefore, it is possible to improve the workability of maintenance performed by a worker, such as inspecting or replacing the second light source unit 201, even further.

### <<7. Explanatory Note and Modified Example>>

As shown In Fig. 5, in the rear view, the second clear covers 202 are disposed on both sides, i.e., the right and left sides, respectively, of the first clear cover 102. However, the second clear covers 202 may be disposed on both sides, i.e., the right and left sides, respectively, of the first clear cover 102 with a clearance or a predetermined distance provided there between, so that the second clear covers 202 are not in contact with the respective sides, i.e., the right and left sides of the first clear cover 102. Note that the second clear covers 202 may also be in contact with both sides, i.e., the right and left sides of the first clear cover 102.

As shown in Fig. 5, in the rear view, two thirds of the vertical length of the second clear cover 202 of the right lamp unit 20A and two thirds of the vertical length of the second clear cover 202 of the left lamp unit 20B extend downward beyond the lower edge 102D of the right-side part 102A and the lower edge 102D of the left-side part 102B of the first clear cover 102. Meanwhile, a half of the vertical length of the second clear cover 202 of the right lamp unit 20A and a half of the vertical length of the second clear cover 202 of the left lamp unit 20B extend downward beyond the lower edge 102D of the central part 102C of the first clear cover 102. Nevertheless, it will also work as long as the vertical length of the second clear cover 202 of the right lamp unit 20A and the vertical length of the second clear cover 202 of the left lamp unit 20B extend downward beyond the lower edge 102D of the first clear cover 102. For example, it may be designed so that 10% to 90%, e.g., 15%, 25%, 35%, 45%, 55%, 65%, 75% or 85%, of the vertical length of the second clear cover 202 of the right lamp unit 20A and 10% to 90%, e.g., 15%, 25%, 35%, 45%, 55%, 65%, 75% or 85%, of the vertical length of the second clear cover 202 of the left lamp unit 20B extend downward beyond the lower edges 102D of the right-side part 102A and the left-side part 102B of the first clear cover 102. Meanwhile, it may also be designed so that 5% to 80%, e.g., 10%, 15%, 25%, 35%, 45%, 55%, 65% or 75%, of the vertical length of the second clear cover 202 of the right lamp unit 20A and 5% to 80%, e.g., 10%, 15%, 25%, 35%, 45%, 55%, 65% or 75%, of the vertical length of the second clear cover 202 of the left lamp unit 20B extend downward beyond the lower edge 102D of the central part 102C of the first clear cover 102.

### [Description of Reference Numerals]

- 1: STRADDLED VEHICLE
- 2: FRONT WHEEL
- 3: REAR WHEEL
- 4: BODY FRAME
- 5: FRONT FORK
- 6: POWER UNIT
- 7: PIVOT PART
- 8: STEERING HANDLE
- 9: LICENSE PLATE ATTACHMENT PLATE
- 10: FIRST LAMP UNIT
- 11: FRONT COVER
- 12: LEG SHIELD
- 13: STORAGE BOX
- 14: HEAD LIGHT
- 15: ENGINE
- 16: TRANSMISSION UNIT
- 20A: RIGHT LAMP UNIT
- 20B: LEFT LAMP UNIT
- 30: COVER PART
- 30F: OPENING PART
- 40: SEAT PART
- 40A: FRONT PART
- 40B: REAR PART
- 40D: LOWER EDGE
- 40L: LEFT PART
- 40R: RIGHT PART
- 101: FIRST LIGHT SOURCE UNIT
- 102: FIRST CLEAR COVER
- 102A: RIGHT-SIDE PART
- 102B: LEFT-SIDE PART
- 102C: CENTRAL PART
- 102D: LOWER EDGE
- 102L: LEFT EDGE
- 102R: RIGHT EDGE
- 102U: UPPER EDGE
- 102W: REAR EDGE
- 201: SECOND LIGHT SOURCE UNIT
- 202: SECOND CLEAR COVER
- 202C: CENTRAL PART
- 202D: BOTTOM-SURFACE PART
- 202L: LEFT-SIDE PART
- 202R: RIGHT-SIDE PART
- 202U: TOP-SURFACE PART
- 202W: REAR EDGE
- 221: UPPER-HALF PART
- 222: LOWER-HALF PART
- 301: REAR COVER
- 301C: CENTRAL PART
- 301D: LOWER EDGE
- 301L: LEFT-SIDE PART
- 301R: RIGHT-SIDE PART
- 301U: UPPER EDGE
- 302A: RIGHT SIDE COVER
- 302B: LEFT SIDE COVER
- 302D: LOWER EDGE
- 302U: UPPER EDGE
- 302: UDCONNECTION PART
- 302X: FRONT EDGE
- 302W: REAR EDGE
- H: HINGE PIN
- F: INTERNAL SPACE
- F1, F2, F3: SPACE
- FH: OPENING PART
- X: PINCHING PART
- Z: WIRE-COLLECTING TUBE

## Claims

1. A straddled vehicle comprising:
vehicle body;
a first lamp unit (10) disposed on a central part of a rear part of the vehicle body, and including a first light source unit (101) and a first clear cover (102);
a right lamp unit (20A) and a left lamp unit (20B) disposed on both sides, that is, a right side and a left side, respectively, of the first lamp unit (10), and each of the right lamp unit (20A) and the left lamp unit (20B) including a second light source unit (201) and a second clear cover (202); wherein
the second clear cover (202) is located behind both sides of the first clear cover (102), and
in a right-side view of the vehicle, at least a portion of the second clear cover (202) of the right lamp unit (20A) overlaps at least a portion of a right side of the first clear cover (102), and in a left-side view of the vehicle, at least a portion of the second clear cover (202) of the left lamp unit (20B) overlaps at least a portion of a left side of the first clear cover (102), and
the second light source units (201) are located ahead of the first light source unit (101),
**characterized by**
a cover part (30) disposed above the first lamp unit (10), the right lamp unit (20A), and the left lamp unit (20B), wherein
in vertical direction of the vehicle, a vertical length of the cover part (30) until the first lamp unit (10) on the central part is longer than a vertical length of the cover part (30) until the right lamp unit (20A) and the left lamp unit (20B) on both side parts,
the second clear cover (202) extends downward beyond a lower edge (102D) of the first clear cover (102), and a lower-half part (222) of the second clear cover (202) is located behind an upper-half part (221) thereof.

2. A straddled vehicle according to claim 1, **characterized in that** a central part of the first clear cover (102) is located behind both side parts thereof, and
a central part of the second clear cover (202) is located behind both side parts thereof.

3. A straddled vehicle according to claim 2, **characterized in that** a rear edge (202W) of the second clear cover (202), which is inclined forward, intersects an extension line extended from a rear edge (102W) of the central part of the first clear cover (102) in the side view of the vehicle.

4. A straddled vehicle according to at least one of the claims 1 to 3, **characterized in that** the second clear cover (202) has a triangular shape in cross section.

5. A straddled vehicle according at least one of the claims 1 to 4, **characterized in that** at least a portion of a top-surface part (202U) of the second clear cover (202) is exposed from the cover part (30).

6. A straddled vehicle according at least one of the claims 1 to 5, **characterized by** a front wheel (2) and a rear wheel (3), wherein
the cover part (30) includes a rear cover (301), and a right side cover (302A) and a left side cover (302B) located on a right side and a left side, respectively, of the rear cover (301),
lower edges (302D) of the right and left side covers (302A) and (302B) are inclined obliquely upward from the front toward the rear so that they are located above the rear wheel (3), and
upper edges (302U) of the right and left side covers (302A) and (302B) are inclined obliquely upward from the front toward the rear in such a manner that rear parts of them are inclined more sharply than front parts of them.

7. A straddled vehicle according to claim 6, **characterized in that** the second light source unit (201) is disposed ahead of rear edges (302W) of the right and left side covers (302A) and (302B) so that the second light source unit (201) is blocked by the right and left side covers (302A) and (302B) in the side view of the vehicle.

8. A straddled vehicle according to claim 6 or 7, **characterized by** a seat part (40) that is openably attached above the cover part (30), wherein
a lower edge (40D) of a rear part of the seat part (40) is sharply inclined beyond a lower edge (40D) of a front part of the seat part (40) so as to conform to the sharp inclination of the upper edges (302U) of the right and left side covers (302A) and (302B).

9. A straddled vehicle according to at least one of the claims 1 to 8, **characterized in that** the cover part (30) has a projecting surface projected upward from both side parts to the central part in a rear view of the vehicle.

10. A straddled vehicle according to at least one of the claims 1 to 9, **characterized in that** an internal space (F) having an opening part (FH) is formed on an underside of the cover part (30) disposed above the first lamp unit (10) and the right and left lamp units (20A) and (20B), and
in the internal space (F), in vertical direction of the vehicle, a vertical space of the cover part (30) until the first lamp unit (10) on the central part is larger than a vertical space of the cover part (30) until the right and left lamp units (20A) and (20B) on both sides.

## Patentansprüche

1. Ein Spreiz-Sitz-Fahrzeug, das umfasst:
einen Fahrzeug-Körper;
eine erste Leuchten-Einheit (10), die an einem Zentral-Teil von einem Rück-Teil von dem Fahrzeug-Körper positioniert ist, und eine erste Licht-Quellen-Einheit (101) und eine erste Klar-Abdeckung (102) beinhaltet;
eine rechte Leuchten-Einheit (20A) und eine linke Leuchten-Einheit (20B), die an beiden Seiten, das heißt, jeweils einer rechten Seite und einer linken Seite von der ersten Leuchten-Einheit (10), positioniert sind, und jede von der rechten Leuchten-Einheit (20A) und der linken Leuchten-Einheit (20B) beinhalten eine zweite Licht-Quellen-Einheit (201) und eine zweite Klar-Abdeckung (202); wobei
die zweite Klar-Abdeckung (202) hinter beiden Seiten von der ersten Klar-Abdeckung (102) angeordnet ist, und
in einer Rechts-Seiten-Ansicht von dem Fahrzeug zumindest ein Abschnitt von der zweiten Klar-Abdeckung (202) von der rechten Leuchten-Einheit (20A) zumindest einem Abschnitt von einer rechten Seite von der ersten Klar-Abdeckung (102) überlappt, und
in einer Links-Seiten-Ansicht von dem Fahrzeug zumindest ein Abschnitt von der zweiten Klar-Abdeckung (202) von der linken Leuchten-Einheit (20B) zumindest einen Abschnitt von einer linken Seite von der ersten Klar-Abdeckung (102) überlappt, und
die zweiten Licht-Quellen-Einheiten (201) sind vor der ersten Licht-Quellen-Einheit (101) angeordnet,
**gekennzeichnet durch**
einen Abdeck-Teil (30), der oberhalb der ersten Leuchten-Einheit (10), der rechten Leuchten-Einheit (20A) und der linken Leuchten-Einheit (20B) positioniert ist, wobei in einer Vertikal-Richtung von dem Fahrzeug eine Vertikal-Länge von dem Abdeck-Teil (30) bis zu der ersten Leuchten-Einheit (10) an dem Zentral-Teil länger ist als eine Vertikal-Länge von dem Abdeck-Teil (30) bis zu der rechten Leuchten-Einheit (20A) und der linken Leuchten-Einheit (20B) an beiden Seiten-Teilen,
die zweite Klar-Abdeckung (202) erstreckt sich nach unten über eine untere Kante (102D) von der ersten Klar-Abdeckung (102), und ein unterer Halb-Teil (222) von der zweiten Klar-Abdeckung (202) ist hinter einem oberen Halb-Teil (221) derselben angeordnet.

2. Ein Spreiz-Sitz-Fahrzeug gemäß zu Anspruch 1, **dadurch gekennzeichnet, dass** ein Zentral-Teil von der ersten Klar-Abdeckung 101 hinter beide Seiten-Teilen derselben angeordnet ist, und
ein Zentral-Teil von der zweiten Klar-Abdeckung (202) ist hinter beiden Seiten-Teilen derselben angeordnet.

3. Ein Spreiz-Sitz-Fahrzeug gemäß zu Anspruch 2, **dadurch gekennzeichnet, dass** eine Rück-Kante (202W) von der zweiten Klar-Abdeckung (202), die nach vorne geneigt ist, eine Erstreckungs-Linie schneidet, die sich von einer Rück-Kante (102W) von dem Zentral-Teil von der ersten Klar-Abdeckung (102) erstreckt, in der Seiten-Ansicht von dem Fahrzeug.

4. Ein Spreiz-Sitz-Fahrzeug gemäß zumindest einem der Ansprüche 1 bis 3, **dadurch gekennzeichnet, dass** die zweite Klar-Abdeckung (202) eine dreieckige Form im Querschnitt hat.

5. Ein Spreiz-Sitz-Fahrzeug gemäß zumindest einem der Ansprüche 1 bis 4, **dadurch gekennzeichnet, dass** zumindest ein Abschnitt von einem Oben-Flächen-Teil (202U) von der zweiten Klar-Abdeckung (202) von dem Abdeck-Teil (30) freiliegt.

6. Ein Spreiz-Sitz-Fahrzeug gemäß zumindest einem der Ansprüche 1 bis 5, **gekennzeichnet durch,** ein Vorder-Rad (2) und ein Hinter-Rad (3), wobei
der Abdeck-Teil (30) eine Rück-Abdeckung (301), und eine Rechts-Seite-Abdeckung (302A) und eine Links-Seite-Abdeckung (302B), die jeweils an einer rechten Seite und einer linken Seite von der Rück-Abdeckung (301) angeordnet sind, beinhaltet,
untere Kanten (302D) von den Rechts- und Links-Seite-Abdeckungen (302A und 302B) sind schräg nach oben, von vorne nach hinten geneigt, so dass sie oberhalb des Hinter-Rads (3) angeordnet sind, und
obere Kanten (302U) von den Rechts- und Links-Seite-Abdeckungen (302A und 302B) sind schräg nach oben, von vorne nach hinten geneigt, in so einer Weise, dass Rück-Teile von diesen schärfer geneigt sind als Vorder-Teile von diesen.

7. Ein Spreiz-Sitz-Fahrzeug gemäß zu Anspruch 6, **dadurch gekennzeichnet, dass** die zweite Licht-Quellen-Einheit (201) vor Rück-Kanten (302W) von den Rechts- und Links-Seite-Abdeckungen (302A und 302B) positioniert sind, so dass die zweite Licht-Quellen-Einheit (201) durch die Rechts- und Links-Seite-Abdeckungen (302A und 302B) in der Seiten-Ansicht von dem Fahrzeug blockiert ist.

8. Ein Spreiz-Sitz-Fahrzeug gemäß zu Anspruch 6 oder 7, **gekennzeichnet durch,** einen Sitz-Teil (40), der zu öffnen oberhalb des Abdeck-Teils (30) angebracht ist, wobei
eine untere Kante (40D) von einem Rück-Teil von dem Sitz-Teil (40) scharf unter eine untere Kante (40D) von einem Vorder-Teil von dem Sitz-Teil (40) geneigt ist, so dass diese der scharfen Neigung von den oberen Kanten (302U) von den Rechts- und Links-Seite-Abdeckungen (302A und 302B) entspricht.

9. Ein Spreiz-Sitz-Fahrzeug gemäß zumindest einem der Ansprüche 1 bis 8, **dadurch gekennzeichnet, dass** der Abdeck-Teil (30) eine Vorsprungs-Fläche hat, die nach oben von beiden Seiten-Teilen von dem Zentral-Teil vorspringt, in einer Rück-Ansicht von dem Fahrzeug.

10. Ein Spreiz-Sitz-Fahrzeug gemäß zumindest einem der Ansprüche 1 bis 9, **dadurch gekennzeichnet, dass** ein Innen-Raum (F), der einen Öffnungs-Teil (FH) hat, an einer Unter-Seite von dem Abdeck-Teil (30), der oberhalb der ersten Leuchten-Einheit (10) und den rechten und linken Leuchten-Einheiten (20A) und (20B) positioniert ist, ausgebildet ist, und
in dem Innen-Raum (F), in Vertikal-Richtung von dem Fahrzeug, ein Vertikal-Raum von dem Abdeck-Teil (30) bis zu der ersten Leuchten-Einheit (10) an dem Zentral-Teil größer als ein Vertikal-Raum von dem Abdeck-Teil (30) bis den rechten und linken Leuchten-Einheiten (20A) und (20B) an beiden Seiten ist.

## Revendications

1. Véhicule à enfourcher comprenant :
une carrosserie de véhicule ;
une première unité de lampe (10) disposée sur une partie centrale d'une partie arrière de la carrosserie de véhicule, et comprenant une première unité de source lumineuse (101) et un premier couvercle transparent (102) ;
une unité de lampe droite (20A) et une unité de lampe gauche (20B) disposées des deux côtés, c'est-à-dire un côté droit et un côté gauche, respectivement, de la première unité de lampe (10), et chacune de l'unité de lampe droite (20A) et de l'unité de lampe gauche (20B) comprenant une seconde unité de source lumineuse (201) et un second couvercle transparent (202) ; dans lequel
le second couvercle transparent (202) est situé derrière les deux côtés du premier couvercle transparent (102), et
sur une vue côté droit du véhicule, au moins une partie du second couvercle transparent (202) de l'unité de lampe droite (20A) chevauche au moins une partie d'un côté droit du premier couvercle transparent (102), et sur une vue côté gauche du véhicule, au moins une partie du second couvercle transparent (202) de l'unité de lampe gauche (20B) chevauche au moins une partie d'un côté gauche du premier couvercle transparent (102), et
les secondes unités de source lumineuse (201) sont situées devant la première unité de source lumineuse (101),
**caractérisé par**
une partie de couvercle (30) disposée au-dessus de la première unité de lampe (10), de l'unité de lampe droite (20A), et de l'unité de lampe gauche (20B), dans lequel
dans une direction verticale du véhicule, une longueur verticale de la partie de couvercle (30) jusqu'à la première unité de lampe (10) sur la partie centrale est plus longue qu'une longueur verticale de la partie de couvercle (30) jusqu'à l'unité de lampe droite (20A) et l'unité de lampe gauche (20B) sur les deux parties latérales,
le second couvercle transparent (202) s'étend vers le bas au-delà d'un bord inférieur (102D) du premier couvercle transparent (102), et une partie de moitié inférieure (222) du second couvercle transparent (202) est située derrière une partie de moitié supérieure (221) de celui-ci.

2. Véhicule à enfourcher selon la revendication 1, **caractérisé en ce qu'**une partie centrale du premier couvercle transparent (102) est située derrière les deux parties latérales de celui-ci, et
une partie centrale du second couvercle transparent (202) est située derrière les deux parties latérales de celui-ci.

3. Véhicule à enfourcher selon la revendication 2, **caractérisé en ce qu'**un bord arrière (202W) du second couvercle transparent (202), qui est incliné vers l'avant, coupe une ligne d'extension s'étendant à partir d'un bord arrière (102W) de la partie centrale du premier couvercle transparent (102) sur la vue de côté du véhicule.

4. Véhicule à enfourcher selon au moins l'une des revendications 1 à 3, **caractérisé en ce que** le second couvercle transparent (202) a une forme triangulaire en coupe transversale.

5. Véhicule à enfourcher selon au moins l'une des revendications 1 à 4, **caractérisé en ce qu'**au moins une portion d'une partie de surface supérieure (202U) du second couvercle transparent (202) est exposée à partir de la partie de couvercle (30).

6. Véhicule à enfourcher selon au moins l'une des revendications 1 à 5, **caractérisé par** une roue avant (2) et une roue arrière (3), dans lequel
la partie de couvercle (30) comprend un couvercle arrière (301), et un couvercle côté droit (302A) et un couvercle côté gauche (302B) situés respectivement sur un côté droit et un côté gauche du couvercle arrière (301),
des bords inférieurs (302D) des couvercles côtés droit et gauche (302A) et (302B) sont inclinés obliquement vers le haut depuis l'avant vers l'arrière de sorte qu'ils sont situés au-dessus de la roue arrière (3), et
des bords supérieurs (302U) des couvercles côtés droit et gauche (302A) et (302B) sont inclinés obliquement vers le haut depuis l'avant vers l'arrière de telle manière à ce que des parties arrière de ceux-ci sont inclinées plus abruptement que des parties avant de ceux-ci.

7. Véhicule à enfourcher selon la revendication 6, **caractérisé en ce que** la seconde unité de source lumineuse (201) est disposée devant des bords arrière (302W) des couvercles côtés droit et gauche (302A) et (302B) de sorte que la seconde unité de source lumineuse (201) est bloquée par les couvercles côtés droit et gauche (302A) et (302B) sur la vue de côté du véhicule.

8. Véhicule à enfourcher selon la revendication 6 ou 7, **caractérisé par** une partie de siège (40) qui est fixé de manière ouvrable au-dessus de la partie de couvercle (30), dans lequel
un bord inférieur (40D) d'une partie arrière de la partie de siège (40) est incliné de manière abrupte au-delà d'un bord inférieur (40D) d'une partie avant de la partie de siège (40) de manière à se conformer à l'inclinaison abrupte des bords supérieurs (302U) des couvercles côtés droit et gauche (302A) et (302B).

9. Véhicule à enfourcher selon au moins l'une des revendications 1 à 8, **caractérisé en ce que** la partie couvercle (30) présente une surface saillante faisant saillie vers le haut depuis les deux parties latérales vers la partie centrale sur une vue arrière du véhicule.

10. Véhicule à enfourcher selon au moins l'une des revendications 1 à 9, **caractérisé en ce qu'**un espace interne (F) ayant une partie d'ouverture (FH) est formé sur un côté inférieur de la partie de couvercle (30) disposée au-dessus de la première unité de lampe (10) et des unités de lampe droite et gauche (20A) et (20B), et
dans l'espace interne (F), dans une direction verticale du véhicule, un espace vertical de la partie de couvercle (30) jusqu'à la première unité de lampe (10) sur la partie centrale est plus grand qu'un espace vertical de la partie de couvercle (30) jusqu'aux unités de lampe droite et gauche (20A) et (20B) des deux côtés.
